# EUROPEAN PATENT APPLICATION

(11) **EP 4 464 754 A2**
(43) Date of publication of application: **20.11.2024**
(21) Application number: 24154695.1
(22) Date of filing: 30.01.2024
(51) Int. Cl.: C09D 11/322, B41M 3/00, B41J 3/407, B41J 2/21, B41M 5/00, C09D 11/037, C09D 11/102, C09D 11/107, C09D 11/38, D06P 1/66, C09D 11/40, C09D 11/54, D06P 1/645, D06P 1/651, D06P 1/673, D06P 5/00, D06P 5/30, D06P 1/52

(54) **IMAGE FORMING PRETREATMENT LIQUID, INK SET, AND IMAGE FORMING METHOD**

(30) Priority: 31.01.2023 JP 2023013615
(71) Applicant: Brother Kogyo Kabushiki Kaisha, Nagoya Aichi 467-8561 (JP)
(72) Inventor: OTANI, Hana, Nagoya, 467-8562 (JP)
(74) Representative: Prüfer & Partner mbB Patentanwälte · Rechtsanwälte

(57) **Abstract**

There is provided an image forming pretreatment liquid that is applied to a cloth material, which is an absorbent base material, before an image is formed on the cloth material using an ink, the image forming pretreatment liquid including: a cationic polymer or an organic acid of 0.5% by mass or more and 8% by mass or less, wherein as the ink, at least a white ink containing titanium oxide particles having an average particle diameter of more than 10 nm and 200 nm or less is used.

## Description

### TECHNICAL FIELD

The present invention relates to a pretreatment liquid used for forming an image on an absorbent base material by an inkjet method, an ink set containing the pretreatment liquid, and an image forming method using the pretreatment liquid and the ink set.

### BACKGROUND ART

From the related art, a method for forming an image on an absorbent base material such as a cloth material by an inkjet method has been studied. Typically, for example, there has been a garment printer, which is an image forming apparatus that directly forms an image on a garment by an inkjet method or an image forming method called direct to garment (DTG) or the like.

In many inkjet type image forming methods, paper is assumed as a base material, but even when the base material is a cloth material, there is no large difference in an image forming principle. However, regardless of whether the base material is a cloth material or paper, as long as the base material is one (absorbent base material) having high absorbability, an ink discharged by the ink jet method at the time of image formation usually penetrates into the absorbent base material in a thickness direction. Therefore, before the image is formed on the absorbent base material, a pretreatment liquid is applied to the absorbent base material, that is, a pretreatment step is performed.

By the way, among the image forming methods, an image forming method using a white pigment ink is also known. For example, Patent Literature 1 discloses a white ink composition for ink jet textile printing which contains a pigment, a fixing resin, and water and uses two types of resins having different elastic moduli at a predetermined temperature as the fixing resin.

In Patent Literature 1, a pretreatment liquid containing a polyvalent metal salt is used as the pretreatment liquid. The pretreatment liquid aggregates a white pigment and the two types of fixing resins.

In Patent Literature 1, examples of a white ink pigment (white pigment) include metal oxides, metal sulfates, and metal carbonates, and among them, examples of particularly preferable white pigment include particles of titanium dioxide (titanium oxide). Further, as for a particle diameter of the white pigment, an example of a range of an average primary particle diameter is 100 nm or more and 500 nm or less, and an example of a particularly preferable range is 200 nm or more and 300 nm or less. However, a white pigment shown in Examples is only commercially available titanium oxide having an average primary particle diameter of 250 nm.

### CITATION LIST

### PATENT LITERATURE

Patent Literature 1: JP 2021-098796 A

### SUMMARY OF INVENTION

### TECHNICAL PROBLEM

It is known that the higher a refractive index of a material of the white pigment, the higher the scattering intensity, and excellent whiteness is provided to a printed matter. Titanium oxide has an extremely high refractive index among many white pigments, and is also highly safe, and thus titanium oxide is used as the white pigment in a variety of fields. However, there is a problem that titanium oxide has large specific gravity and is easily precipitated. Therefore, in order to prevent the precipitation, a use of titanium oxide having a small particle diameter as a white ink is being considered.

Here, it has been found that when a particle diameter of the titanium oxide particles, which are the white pigment, is made smaller, a quality of a formed white image tends to deteriorate. Specifically, as will be described later, when an image is formed with a white ink using a white pigment having an average particle diameter of 200 nm or less, the white image tend to appear pale and bluish, and cracks tend to occur in the white image.

The present invention has been made to solve such a problem, and an object of the present invention is to provide a pretreatment liquid and an ink set including the pretreatment liquid capable of effectively avoiding or preventing, when an image is formed on a cloth material, which is an absorbent base material, with a white ink using a white pigment, a decrease in whiteness of the image and a crack of the image even when a white pigment having a smaller particle diameter is used, and an image forming method.

### SOLUTION TO PROBLEM

In order to solve the problem, an image forming pretreatment liquid according to the present disclosure is an image forming pretreatment liquid that is applied to a cloth material, which is an absorbent base material, before an image is formed on the cloth material using an ink, and that the image forming pretreatment liquid includes: a cationic polymer or an organic acid of 0.5% by mass or more and 8% by mass or less, wherein as the ink, at least a white ink containing titanium oxide particles having an average particle diameter of more than 10 nm and 200 nm or less is used.

According to the configuration, the pretreatment liquid to be applied to the absorbent base material before the image is formed with the white ink by using the titanium oxide particles having the relatively smaller particle diameter than that of the related art as the white pigment of the white ink contains the cationic polymer or the organic acid having the concentration in the predetermined range. Accordingly, it is possible to effectively prevent or avoid an occurrence of a crack in the white image formed after the pretreatment liquid is applied. As a result, it is possible to achieve good whiteness in the white image formed on the cloth material which is the absorbent base material.

The image forming pretreatment liquid may be configured that a lower limit of a content of the organic acid in the pretreatment liquid is 0.7% by mass or more, and a content of the cationic polymer in the pretreatment liquid is 2% by mass or more and 10% by mass or less in terms of a nonvolatile content.

The image forming pretreatment liquid may be configured that the pretreatment liquid contains a quaternary ammonium salt together with the cationic polymer.

The image forming pretreatment liquid may be configured that a content of the quaternary ammonium salt is more than 0.5% by mass and 5% by mass or less.

The image forming pretreatment liquid may be configured that the cationic polymer has, in a monomer unit, a nitrogen-containing structure in which an allyl group (IUPAC name: 2-propenyl group) is bonded to a nitrogen atom.

The image forming pretreatment liquid may be configured that the nitrogen-containing structure is a structure which is a primary ammonium salt, a secondary ammonium salt, a tertiary ammonium salt, or a quaternary ammonium salt, and in which at least one alkyl group bonded to the nitrogen atom is the allyl group.

The image forming pretreatment liquid may be configured that the nitrogen-containing structure is a structure in which two allyl groups are bonded to the nitrogen atom.

The image forming pretreatment liquid may be configured that the organic acid is at least one of formic acid, a saturated fatty acid, a hydroxy acid, an aromatic carboxylic acid, and a dicarboxylic acid.

The image forming pretreatment liquid may be configured that the organic acid has 1 to 8 carbon atoms in a molecule.

The image forming pretreatment liquid may be configured that the organic acid has 1 to 3 carbon atoms in the molecule.

An ink set according to the present disclosure includes: the image forming pretreatment liquid according to claim 1 or 2; wherein the white ink containing the titanium oxide particles having the average particle diameter of more than 10 nm and 200 nm or less.

The ink set may be configured that the titanium oxide particles have an average particle diameter of 50 nm or more.

The image forming pretreatment liquid may be configured that the titanium oxide particles have an average particle diameter of 50 nm or more.

An image forming method according to the present disclosure includes: an image forming step of forming, using an ink, an image on a cloth material which is an absorbent base material; and a pretreatment liquid application step of applying a pretreatment liquid to the cloth material before the image forming step, wherein one containing a cationic polymer or an organic acid of 0.5% by mass or more and 8% by mass or less is used as the pretreatment liquid.

The image forming method may be configured that, in the pretreatment liquid application step, the pretreatment liquid is applied to the cloth material in an amount of 30 mg/cm² or more.

### ADVANTAGEOUS EFFECTS OF INVENTION

In the present invention, according to the above configuration, when an image is formed with a white ink using a white pigment on a cloth material which is an absorbent base material by an inkjet method, it is possible to prevent precipitation of the white pigment by using a white pigment having a small particle diameter. Furthermore, it is possible to effectively avoid or prevent a decrease in whiteness of the image and a crack of the image, which are likely to occur when the white pigment having the small particle diameter is used.

### BRIEF DESCRIPTION OF DRAWINGS

FIG. 1 is a schematic plan view showing a schematic configuration of an inkjet type image forming apparatus in which an ink set according to a representative embodiment of the present disclosure is used.
FIG. 2 is a schematic plan view showing a schematic configuration of a discharge head mounted on a carriage of the image forming apparatus shown in FIG. 1.
FIG. 3A to FIG. 3C are schematic plan views showing configuration examples in each of which a pretreatment liquid is applied before image formation performed by the image forming apparatus shown in FIG. 1.
FIG. 4 is a diagram showing presence or absence of a crack that may occur in a white image formed with a white ink in the present disclosure and evaluation examples thereof.

### DESCRIPTION OF EMBODIMENTS

Hereinafter, a representative embodiment of the present invention will be described with reference to the drawings. Hereinafter, the same or corresponding elements are denoted by the same reference numerals in all the drawings, and a repeated description thereof is omitted.

### [Example of Ink Jet Type Image Formation]

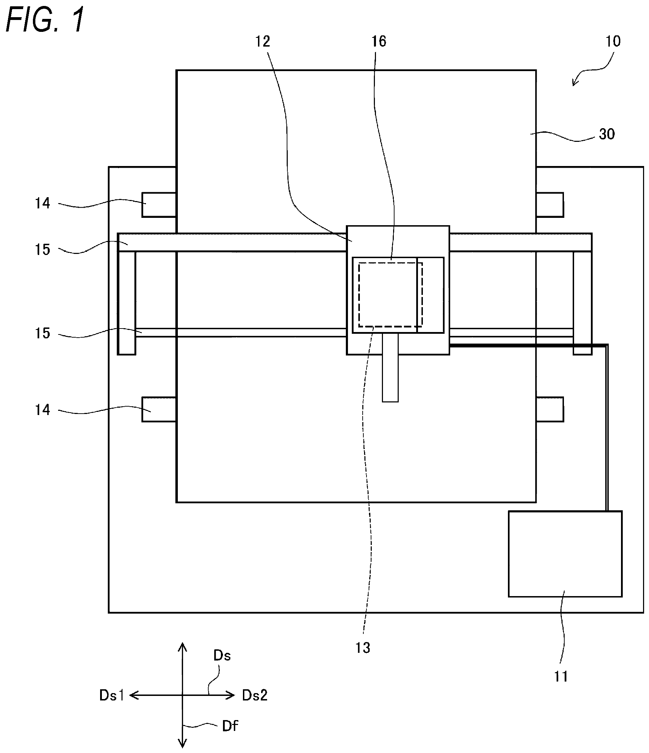

A specific configuration of an inkjet type image forming apparatus using an image forming pretreatment liquid and an ink set according to the present disclosure is not particularly limited. Examples of a representative image forming apparatus include an ink jet type garment printer shown in FIG. 1, and inkjet type image formation will be described.

As shown in FIG. 1, an ink jet type garment printer 10 according to the present embodiment discharges at least an ink onto a cloth material that is a base material, and includes a storage tank 11, a carriage 12, a discharge head 13, a pair of conveying rollers 14, a pair of guide rails 15, and sub-tanks 16. A cloth material 30 is placed on a platen (not shown) in the garment printer 10 as a base material (printing medium) on which an image is formed (printed).

The discharge head 13 indicated by a broken line in FIG. 1 is mounted on the carriage 12. The carriage 12 is supported by the pair of guide rails 15 extending in a movement direction Ds orthogonal to a conveyance direction Df of the cloth material 30, and reciprocates in the movement direction Ds along the guide rails 15. Accordingly, the discharge head 13 reciprocates in the movement direction Ds.

A control device of the garment printer 10 moves the carriage 12 at a predetermined speed while causing the discharge head 13 to discharge ink droplets. Further, a plurality of sub-tanks 16 are mounted on the carriage 12. Each of the sub-tanks 16 is connected to the corresponding storage tank 11 via a tube (ink flow path). In FIG. 1, for convenience of illustration, the sub-tank 16 is schematically shown as a single structure.

The pair of conveying rollers 14 are arranged parallel to each other along the movement direction Ds. The conveying roller 14 is rotated by a drive of a conveyance motor, whereby the cloth material 30 on the platen is conveyed in the conveyance direction Df.

The ink is stored in the storage tank 11. The storage tank 11 is connected to the discharge head 13 via the sub-tank 16 and a tube. Further, the storage tank 11 is provided for each type of ink. In FIG. 1, for convenience of illustration, the storage tank 11 is schematically illustrated as a single structure like the sub-tank 16, and in the present embodiment, for example, five storage tanks 11 are present. Specifically, there are five tanks that store inks of respective colors, that is, a white ink, a black ink, a yellow ink, a cyan ink, and a magenta ink.

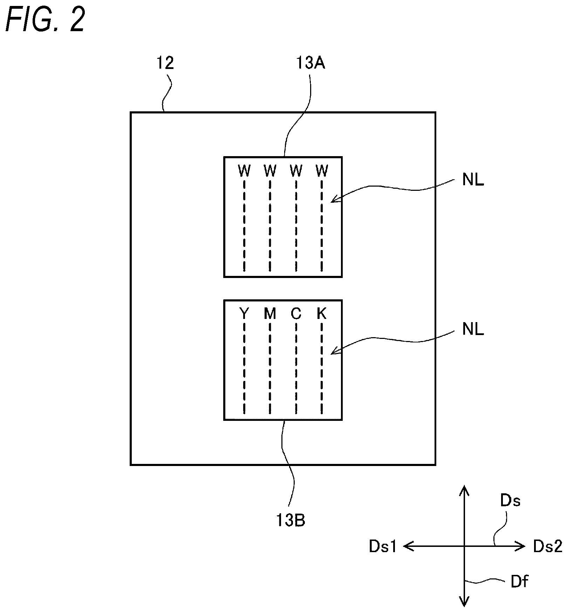

In the present embodiment, for example, as shown in FIG. 2, two discharge heads, that is, 13A and 13B are mounted on the carriage 12. The discharge head 13A and the discharge head 13B are arranged along the conveyance direction Df. The discharge head 13B is disposed, for example, in front of the discharge head 13A. During a first scan in an image forming process, the carriage 12 moves to the right in the movement direction Ds (or to the other direction Ds2 in the movement direction Ds).

Accordingly, the discharge heads 13A and 13B move to the right during the image forming process. In this case, the discharge head 13 discharges the ink droplets onto the cloth material 30 while moving to the right in the movement direction Ds. In the image forming process, an operation of conveying the cloth material 30 in the conveyance direction Df and an operation of discharging the ink droplets while moving the discharge head accordingly are alternately repeated.

The discharge head 13A discharges ink droplets of the white ink (W). In the discharge head 13A, nozzle rows NL that discharge the ink droplets of the white ink are formed along the conveyance direction Df. In an example shown in FIG. 2, four nozzle rows NL that discharge the ink droplets of the white ink are formed in the discharge head 13A at regular intervals in the movement direction Ds. The nozzle row NL that discharges the ink droplets of the white ink is not particularly limited, and may be, for example, two rows or one row.

On the other hand, the discharge head 13B discharges ink droplets of respective colors, that is, yellow (Y), magenta (M), cyan (C), and black (K), which are sometimes collectively referred to as a color ink. In the discharge head 13B, the nozzle rows NL that discharge respective ink droplets are formed along the conveyance direction Df. The nozzle rows NL are formed at regular intervals in the movement direction Ds.

In the example shown in FIG. 2, an arrangement order in the movement direction Ds of the nozzle rows NL in the discharge head 13B is, but not limited to, a nozzle row NL that discharges the yellow ink droplets, a nozzle row NL that discharges the magenta ink droplets, a nozzle row NL that discharges the cyan ink droplets, and a nozzle row NL that discharges the black ink droplets in the other direction Ds2 of the movement direction Ds.

In the present embodiment, a color image is printed on the cloth material 30 by discharging the ink droplets of these five colors onto the cloth material 30. In particular, in the present disclosure, when the color image is printed on the cloth material 30, in order to reduce an influence on a color of the cloth material 30 and a material of the cloth material 30, the white ink droplets are discharged first as a base ink, and a white image is formed first. The ink droplets of the color ink are discharged onto the white image formed on the cloth material 30.

In the present disclosure, at the time of the image formation, as will be described later, the image forming pretreatment liquid (hereinafter, simply referred to as "pretreatment liquid") according to the present disclosure is applied to the cloth material 30 as the base material before the white image is formed. By applying the pretreatment liquid to an image forming surface (printing surface) of the cloth material 30, it is possible to form a good image on the cloth material 30 by preventing, avoiding, or inhibiting a phenomenon such as penetration of the white ink or the color ink into the cloth material 30 and penetration of the inks into a joint or the like of the cloth material 30.

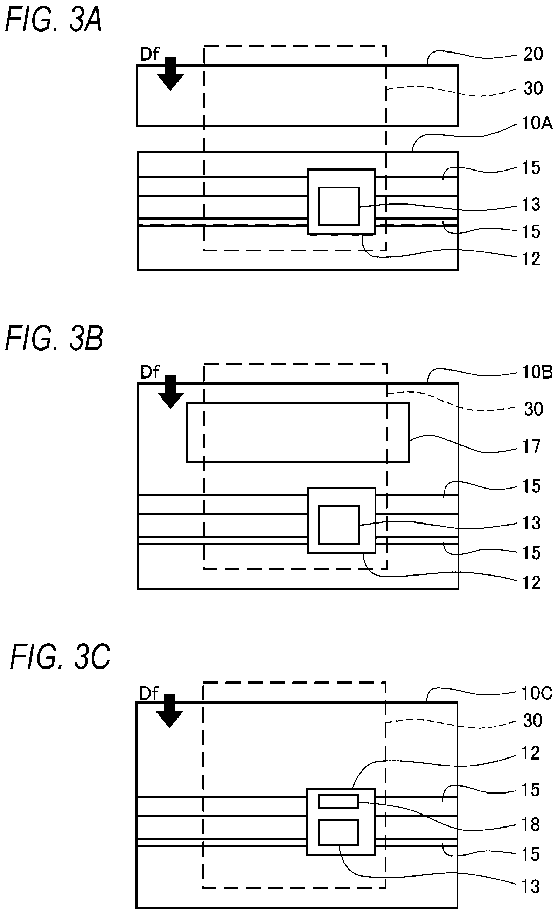

In the present embodiment, a specific configuration in which the pretreatment liquid is applied to the cloth material 30 is not particularly limited. For example, as shown in FIG. 3A, it is possible to adopt a configuration including a garment printer 10A and a pretreatment liquid application device 20.

The garment printer 10A has the same configuration as the garment printer 10 illustrated in FIG. 1, and only the carriage 12, the discharge head 13, and the guide rails 15 are schematically illustrated in FIG. 3A. Further, in FIG. 3A, the conveyance direction Df of the cloth material 30 is indicated by a black block arrow. As a configuration independent of the garment printer 10A, the pretreatment liquid application device 20 is located upstream in the conveyance direction Df as viewed from the garment printer 10A.

In FIG. 3A, the cloth material 30 is illustrated by a broken line, the cloth material 30 is first conveyed to the pretreatment liquid application device 20 along the conveyance direction Df, and the pretreatment liquid is applied to the image forming surface of the cloth material 30. Thereafter, the cloth material 30 is further conveyed along the conveyance direction Df and conveyed to the garment printer 10A, the white ink is further applied on the image forming surface to which the pretreatment liquid is applied to form the white image, and then a desired image is formed on the cloth material 30 by applying the color ink.

FIG. 3A is only a schematic diagram. In the example described above, the pretreatment liquid application device 20 and the garment printer 10A are located on the same conveyance path, and the application of the pretreatment liquid and the application of the white ink or the like are continuously performed on the cloth material 30, but the present disclosure is not limited thereto. For example, the pretreatment liquid application device 20 and the garment printer 10A may be independent liquid application devices. For example, an application step of the pretreatment liquid performed by the pretreatment liquid application device 20 and an application step of the white ink performed by the garment printer 10A may be continuous by sharing the conveyance path as described above, or may be performed as steps independent of each other.

A specific configuration of the pretreatment liquid application device 20 is not particularly limited, and a known application method can be suitably used. Specific examples of the application method include a spray coating method, a blade application method, a roll coating method, an inkjet method, and an immersion processing method (method of immersing the cloth material 30 in the pretreatment liquid and then squeezing the cloth material 30 with a mangle roll). From the viewpoint of continuously performing the application step of the pretreatment liquid and the application step of the white ink or the color ink, an ink jet method can also be adopted.

The application of the pretreatment liquid performed by the pretreatment liquid application device 20 may be performed on the entire image forming surface of the cloth material 30. Alternatively, depending on various conditions such as a size or a shape of the formed image, and a shape or a type of the cloth material 30, the pretreatment liquid may be applied only to a region (region where the color ink is applied) where the image is formed on the cloth material 30. In the former case, a spray coating method, a blade application method, a roll coating method, an immersion processing method, or the like can be suitably adopted. In the latter case, an inkjet method can be suitably adopted.

In the configuration example shown in FIG. 3A, although the garment printer 10A and the pretreatment liquid application device 20 are independent configurations, the present disclosure is not limited thereto, and the garment printer 10A and the pretreatment liquid application device 20 may be integrated.

For example, as shown in FIG. 3B, a garment printer 10B includes an ink jet type image forming unit (storage tank 11, carriage 12, discharge head 13, guide rail 15, and the like) similarly to the garment printer 10 shown in FIG. 1 (or the garment printer 10A shown in FIG. 3A), and further includes a pretreatment liquid application unit 17.

When viewed from the carriage 12, the discharge head 13, the guide rail 15, and the like (image forming unit), the pretreatment liquid application unit 17 is located upstream in the conveyance direction Df (black block arrow in the figure) of the cloth material 30 (broken line in the figure), and is accommodated in a housing of the garment printer 10B. Therefore, in the garment printer 10B, the ink jet type image forming unit (ink application step) and the pretreatment liquid application unit 17 (pretreatment liquid application step) are integrated.

A specific configuration of the pretreatment liquid application unit 17 is not particularly limited, and may be any configuration as long as the pretreatment liquid application unit 17 can perform a known application method such as a spray coating method, a blade application method, a roll coating method, an ink jet method, or an immersion processing method, similarly to the pretreatment liquid application device 20 described above. For example, when the pretreatment liquid application device 20 is an ink jet type pretreatment liquid application device, the ink jet type pretreatment liquid application unit 17 that applies the pretreatment liquid is located upstream in the conveyance direction Df, and the inkjet type image forming unit that applies the white ink and the color ink is located downstream in the conveyance direction Df.

If the pretreatment liquid application step is performed by the ink jet method, as shown in FIG. 3C, a garment printer 10C may have a configuration in which the discharge head 13 for the ink application and a discharge head 18 for the pretreatment liquid application are provided in the carriage 12. In this case, in addition to the storage tank 11 for the ink, the sub-tank 16, and the tube connecting the storage tank 11 and the sub-tank 16, the storage tank 11 for the pretreatment liquid, the sub-tank 16, the tube, and the like may be provided. Alternatively, for example, when there is no discharge head 18, a part of the plurality of nozzle rows NL for the white ink provided in the discharge head 13A illustrated in FIG. 2 may be replaced with a nozzle row NL that discharges the pretreatment liquid.

In the present disclosure, at the time of the image formation, as will be described later, the pretreatment liquid may be fixed on the image forming surface of the cloth material 30 by compressing and heating (heat-pressing) the cloth material including a portion to which the pretreatment liquid is applied (pretreatment liquid fixing process). Therefore, each of the pretreatment liquid application device 20 illustrated in FIG. 3A, the pretreatment liquid application unit 17 or the garment printer 10B illustrated in FIG. 3B, or the garment printer 10C illustrated in FIG. 3C may include a configuration (fixing processing unit) that performs the pretreatment liquid fixing process on the cloth material 30. Alternatively, a compression heating device that performs the pretreatment liquid fixing process may be separately used.

At the time of the image formation, when the cloth material including the portion to which the pretreatment liquid is applied is heat-pressed, for example, the following advantages are obtained. First, by pressing the cloth material 30, gaps between fibers of the cloth material 30 are closed and become difficult to penetrate. Accordingly, the pretreatment liquid or the white ink can easily remain on the cloth material 30 (image forming surface) as a medium.

By pressing the cloth material 30, it is possible to reduce concave and convex portions that affect the ease of cracking of the image. The concave and convex portions are caused by wrinkles or fluffing of the cloth material. When the ink is particularly applied to a convex portion among the concave and convex portions on the cloth material 30, there is a possibility that the ink "falls" along a surface of the convex portion toward a concave portion due to gravity. Accordingly, a concentration of the ink in the convex portion is lower than that in the concave portion. Therefore, if the cloth material 30 has many concave and convex portions, the concentration of the ink becomes non-uniform. Further, the ink applied to the cloth material 30 forms an ink film, and when the ink film is heated, shrinkage occurs. Here, when the concentration of the ink is non-uniform, a degree of shrinkage will vary depending on a position of the ink film. Therefore, the ink film, that is, the image is easily cracked.

Although not specifically shown in FIG. 1 or FIGS. 3A to 3C, the garment printers 10 and 10A to 10C may be provided with a configuration for performing a known post-processing in the field of forming the image on the cloth material 30. Alternatively, similarly to a combination of the garment printer 10A and the pretreatment liquid application device 20 shown in FIG. 3A, an independent configuration (post-processing device) for performing the post-processing may be used in combination.

### [Image Forming Pretreatment Liquid]

In the present disclosure, as described above, the pretreatment liquid according to the present disclosure is applied to the image forming surface (printing surface) of the cloth material 30 before the white image is formed (printed) on the cloth material 30 with the white ink. A specific configuration of the pretreatment liquid used in the present disclosure is not particularly limited as long as the pretreatment liquid is an aqueous liquid containing a compound having at least an effect of aggregating titanium oxide (TiO₂) particles, which are color materials used for the white ink, and fixing the titanium oxide particles to the cloth material 30. In the present embodiment, such a compound is referred to as an "aggregating agent" for convenience.

The titanium oxide particles are fine powders (fine particles) and are not dissolved in a general solvent. Accordingly, the white ink is in a form of dispersion or suspension in which the titanium oxide particles are dispersed in a solvent. In order to fix such a white ink to the cloth material 30, it is necessary to aggregate the titanium oxide particles which are the color materials of the white ink. Therefore, the pretreatment liquid contains at least the compound (aggregating agent) having the effect of aggregating the titanium oxide particles.

Examples of the compound having the effect of aggregating the titanium oxide particles include generally known acids, cationic polymers, metal salts, and the like. In particular, in the present disclosure, a cationic polymer or an organic acid is suitably used as the aggregating agent.

The cationic polymer used in the pretreatment liquid according to the present disclosure may be any polymer as long as the polymer contains a cation (positive ion) in a molecular structure thereof. As the cationic polymer that can be used in the present disclosure, compounds known in various known fields such as a fiber processing field, a paper processing field, a water treatment field, a paint or ink field, a cosmetics field, and a metal field can be suitably used.

More specific examples of the cationic polymer include polymers derived from natural products and synthetic polymers. Examples of the polymers derived from the natural products include cationized cellulose and cationized guar gum. The polymers derived from the natural products used herein may be a substantial natural product such as chitosan (chitosan is obtained by hydrolyzing chitin), or a polymer compound obtained by chemically modifying a natural product such as a chitosan derivative, cationized cellulose, or cationized guar gum.

Examples of the synthetic polymers include salts obtained by reacting a polymer having an amine in a structure thereof with an acid, polyethyleneimine, and the like. Examples of the former polymers include polyallylamine, N-trimethylaminomethylpolystyrene, tetraethylenepentamine, polyvinylamine, an amine-epichlorohydrin copolymer, and the like.

Examples of the acid that forms the salt with the polymer having the amine in the structure thereof include organic acids such as formic acid, saturated fatty acids, hydroxy acids, aromatic carboxylic acids, and dicarboxylic acids; and inorganic acids such as sulfuric acid, nitric acid, hydrochloric acid, sulfurous acid, nitrous acid, thiosulfuric acid, phosphoric acid, carbonic acid, and thiocyanic acid. As the organic acids, those having a relatively low molecular weight, such as acetic acid, lactic acid, citric acid, and benzoic acid, are preferably used in addition to formic acid.

In the pretreatment liquid according to the present disclosure, a cation of a polyallylamine derivative can be particularly suitably used as a representative cationic polymer. More specific examples of a polymer structure of the polyallylamine derivative include a polymer in which a monomer unit contains a nitrogen-containing structure in which an allyl group (IUPAC name: 2-propenyl group) is bonded to a nitrogen atom.

A nitrogen-containing structure contained in the polymer structure of such a polyallylamine derivative is not specifically limited, but examples thereof include a structure which is primary ammonium, secondary ammonium, tertiary ammonium, or quaternary ammonium and in which at least one alkyl group bonded to a nitrogen atom is an allyl group. A more representative examples of such a nitrogen-containing structure is a structure in which two allyl groups are bonded to the nitrogen atom of the nitrogen-containing structure. Further, salts obtained by reacting such a polyallylamine derivative with an acid may be, for example, acetates or hydrochlorides.

In Examples to be described later, as the cationic polymer, polydiallyldimethyl ammonium chloride (product name: Unisense FPA100LU, manufactured by Senka Corp.), a methyldiallylamine acetate polymer (product name: PAS-M-1A, manufactured by NITTOBO MEDICAL CO.,LTD.), and a diallylamine acetate/sulfur dioxide copolymer (product name: PAS-92A, NITTOBO MEDICAL CO.,LTD.) are used. Commercially available cationic polymers are polyallylamine having the nitrogen-containing structure described above, and acetates or hydrochlorides of derivatives thereof.

A molecular weight of the cationic polymer is not particularly limited, and may be about the same as that of a cationic polymer used in the known field described above. Typically, a lower limit of a weight average molecular weight Mw of the cationic polymer can be 500 or more, and may be 700 or more, may be 800 or more, or may be 900 or more. Further, an upper limit of Mw of the cationic polymer can be 200,000 or less, and may be 150,000 or less, may be 120,000 or less, or may be 100,000 or less. In Examples to be described below, a cationic polymer having Mw of 2,000 or more and 20,000 or less is used.

A method for measuring a molecular weight of the cationic polymer is not particularly limited. In general, measurement may be performed in terms of polyethylene glycol (PEG) using gel permeation chromatography (GPC).

The organic acid used in the pretreatment liquid according to the present disclosure is not particularly limited, and specific examples thereof include formic acid; saturated fatty acids such as acetic acid, propionic acid, butyric acid, and valeric acid; hydroxy acids such as lactic acid, malic acid, and citric acid; aromatic carboxylic acids such as benzoic acid, phthalic acid, isophthalic acid, terephthalic acid, salicylic acid, and gallic acid; dicarboxylic acids such as oxalic acid, malonic acid, succinic acid, and fumaric acid; uronic acids such as glucuronic acid, galacturonic acid, and iduronic acid; ascorbic acid; and organic sulfonic acids such as methanesulfonic acid and phenolsulfonic acid. Representative examples of the organic acid include at least one of formic acid, saturated fatty acids, hydroxy acids, aromatic carboxylic acids, and dicarboxylic acids.

These organic acids may be salts in which a cation is not a metal ion (for example, an ammonium salt or an amine salt). Such nonmetallic salts of the organic acids may be partially neutralized salts rather than 100% salts.

Particularly representative examples of the organic acid include an organic acid having a relatively low molecular weight in which the number of carbon atoms in a molecule is in a range of 1 to 8, and further include an organic acid in which the number of carbon atoms in the molecule is in a range of 1 to 3. Specific examples of the compound include formic acid, acetic acid, lactic acid, and propionic acid. When the organic acid is such an organic acid having 8 or less carbon atoms, preferably 3 or less carbon atoms, the organic acid can be prevented from remaining on the cloth material by evaporation or the like when the cloth material to which the pretreatment liquid is applied is heated and dried after printing. In Examples to be described later, formic acid, acetic acid, or lactic acid is used as the organic acid.

In the present disclosure, as shown in Examples below, a quaternary ammonium salt can be used in combination with the cationic polymer as the aggregating agent.

The quaternary ammonium salt used in the present disclosure may be represented by a general formula of (NR¹ R² R³ R⁴)⁺X⁻. R¹ to R⁴ in the general formula may each independently be a hydrocarbon group having 1 to 30 carbon atoms. Therefore, R¹ to R⁴ may all be the same hydrocarbon group, or all different hydrocarbon groups, or a part thereof may be the same hydrocarbon group (for example, R¹ and R² are the same hydrocarbon group and R³ and R⁴ are different hydrocarbon groups).

Specific examples of the hydrocarbon group include, but are not particularly limited to, an alkyl group, an alkenyl group, and an aryl group. Further, X⁻ in the general formula is an anion. The anion may be a monatomic ion or a molecular ion (polyatomic ion). Therefore, (NR¹ R² R³ R⁴)⁺ is a cation.

Examples of the representative quaternary ammonium salt in the present disclosure include a structure in which R¹ to R³ are an alkyl group having 1 to 5 carbon atoms and R⁴ is an alkyl group having 6 to 30 carbon atoms in the above general formula. These alkyl groups may be linear or branched. These alkyl groups may have a structure in which some hydrogen atoms are substituted with, for example, halogen atoms or other substituents.

Specific examples of the alkyl group having 1 to 5 carbon atoms include, but are not particularly limited to, a methyl group, an ethyl group, an n-propyl group, an isopropyl group, an n-butyl group, a sec-butyl group, an isobutyl group, a tert-butyl group, an n-pentyl group, an isopentyl group, a sec-pentyl group, a 3-pentyl group, and a tert-pentyl group. Further, examples of the alkyl group having 6 to 30 carbon atoms include, but are not particularly limited to, a hexyl group, a heptyl group, an octyl group, a nonyl group, a decyl group, a lauryl group (dodecyl group), a tetradecyl group, and a cetyl group (hexadecyl group).

The anion in the general formula is also not particularly limited, and examples thereof include inorganic acid ions such as a sulfate ion, a nitrate ion, and a hydrochloride ion; monocarboxylic acid ions such as a formic acid ion, an acetate ion, and a propionic acid ion; alkyl sulfate ions such as a methyl sulfate ion and an ethyl sulfate ion; dicarboxylic acid ions such as a malic acid ion and an itaconic acid ion; tricarboxylic acid ions such as a citric acid ion and a propanetricarboxylic acid ion; hydroxide ions; and halide ions. Regarding polyvalent anions produced by dissociation of protons from polyvalent acids such as dicarboxylic acids or tricarboxylic acids, one quaternary ammonium cation corresponds to one carboxylate ion and forms a salt.

More specific examples of the quaternary ammonium salt include a tetraalkyl quaternary ammonium salt, and examples thereof include, but are not particularly limited to, lauryltrimethylammonium chloride, cetyltrimethylammonium chloride, benzyldimethylalkylammonium chloride, hexadecyltrimethylammonium bromide, and lauryltrimethylammonium sulfate. In Examples to be described later, the tetraalkyl quaternary ammonium salt is used.

Specific examples of commercially available quaternary ammonium salts include, but are not particularly limited to, benzalkonium chloride manufactured by Tokyo Chemical Industry Co., Ltd., and product names: Cationogen (registered trademark) TML, Cationogen (registered trademark) TMP, and Cationogen (registered trademark) ES-O manufactured by Daiichi Kogyo Seiyaku Co., Ltd.

In the present disclosure, it is not preferable to use only the quaternary ammonium salt as the aggregating agent, as is clear from Examples to be described later. The pretreatment liquid containing only the quaternary ammonium salt may not sufficiently improve the whiteness of the obtained white image (Comparative Example 3 or 4).

In the pretreatment liquid according to the present disclosure, the cationic polymer, the organic acid, or the quaternary ammonium salt used as the aggregating agent may be used alone or in combination of two or more thereof as appropriate. The term "two or more" used herein includes not only cases in which different types of compounds are used in combination, such as a combination of an organic acid and a cationic polymer, or a combination of a cationic polymer and a quaternary ammonium salt, or a case in which, for example, a combination of two or more types of organic acids or a combination of two or more types of cationic polymers are used as the aggregating agent.

Since the pretreatment liquid used in the present disclosure is aqueous, at least water is used as the solvent. The water used as the solvent may have relatively high purity. Generally, ion exchanged water, ultrafilter water, reverse osmosis water, distilled water, and the like can be used. The water having high purity may be pure water (electrical resistivity at 25°C is about 0.1 MΩ·cm to 1.5 MΩ·cm) or ultrapure water (electrical resistivity at 25°C is 10 MΩ·cm or more).

In the pretreatment liquid according to the present disclosure, a content of the aggregating agent is not particularly limited, but a representative range of the content of the aggregating agent varies depending on a type of the aggregating agent. For example, when the compound acting as the aggregating agent is the cationic polymer, a content of the cationic polymer in the pretreatment liquid is not particularly limited, but when a total amount of the pretreatment liquid is 100% by mass, a lower limit thereof is preferably 2% by weight or more and an upper limit thereof is preferably 10% by weight or less in terms of a nonvolatile content of the cationic polymer in a composition containing the cationic polymer.

"In terms of a nonvolatile content" (or in terms of a solid content) used herein means a mass of a remainder after removing a volatile content from a total amount of the composition containing the cationic polymer. As described above, as the cationic polymer, a commercially available product can be used, but the commercially available cationic polymer is prepared as a polymer composition in which a polymer component is dissolved or dispersed in a solvent. Alternatively, even if the cationic polymer is not a commercially available product, from the viewpoint of dispersing or dissolving the cationic polymer in a main solvent (water), the cationic polymer is preferably used as a polymer composition dissolved in a solvent in advance.

When the compound acting as the aggregating agent is the organic acid, a lower limit of a content of the organic acid in the pretreatment liquid is 0.5% by weight or more and an upper limit thereof is 8% by weight or less when the total amount of the pretreatment liquid is 100% by mass. The lower limit of the content of the organic acid may be 0.7% by weight or more.

When the compound acting as the aggregating agent is the quaternary ammonium salt, the compound is used in combination with the cationic polymer or the organic acid, and a content of the quaternary ammonium salt in the pretreatment liquid is not particularly limited, but when a total amount of the pretreatment liquid is 100% by mass, a lower limit thereof may be more than 0.5% by weight and an upper limit thereof may be 5% by weight or less.

When the content of the aggregating agent is within the above range, good quality can be maintained in the obtained white image as described in Examples below. The content of the aggregating agent is not limited to the above representative range. In Examples to be described below, a content of water is a balance for other components.

The pretreatment liquid according to the present disclosure may contain other components in addition to the water as a main solvent and the compound acting as the aggregating agent. Examples of the other components include various additives known in the pretreatment liquid and the ink used by the ink jet method. Representative additives will be specifically described in the white ink to be described later.

### [White Ink]

In the present disclosure, at the time of the image formation, as described above, the pretreatment liquid according to the present disclosure is applied to the image forming surface (printing surface) of the cloth material 30 to fix the pretreatment liquid to the cloth material 30, and then the white image is formed (printed) with the white ink. A specific configuration of the white ink used in the present disclosure is not particularly limited as long as the white ink is an aqueous ink containing the titanium oxide (TiO₂) particles as the color material.

An average particle diameter (average primary particle diameter) of the titanium oxide particles is not particularly limited, but a lower limit thereof may be 10 nm or more, may be 20 nm or more, or may be 50 nm or more. On the other hand, an upper limit value of the average particle diameter of the titanium oxide particles may be 200 nm or less, may be less than 200 nm, may be 180 nm or less, or may be 150 nm or less.

When the average particle diameter of the titanium oxide particles is 10 nm or less, improvement of a precipitation property can be expected, but since a particle diameter is extremely smaller than a wavelength of visible light, Mie scattering hardly occurs. Therefore, it is considered that the white ink is almost colorless in the state of the dispersion, and the whiteness of the formed white image is significantly reduced. On the other hand, when the average particle diameter of the titanium oxide particles is 200 nm or more, a precipitation speed is high, and thus the titanium oxide particles are more easily precipitated.

A method for measuring the average particle diameter of the titanium oxide particles is not particularly limited, and a known method for measuring an average particle diameter of nano-level fine particles can be suitably used, but in the present disclosure, as described in Examples to be described later, a method is used in which scattered light intensity is measured using a dynamic scattering type particle size distribution measuring device, and the average particle diameter is calculated using a photon correlation method based on the intensity.

As a result of intensive studies performed by the present inventors, it is found that when the average particle diameter of the titanium oxide particles is 200 nm or less as described above, the whiteness of the formed white image tends to decrease. Specifically, it is found that when a white image is formed with a white ink using titanium oxide particles having a smaller particle diameter, the white image tends to appear pale and bluish, and the cracks tend to occur in the white image.

A reason why the white image is pale and bluish is considered to be that a tendency of light scattering in the white image changes as the average particle diameter of the titanium oxide particles becomes smaller.

In general, in order for particles to appear white due to the light scattering, it is required that a main source of the light scattering be Mie scattering. Mie scattering is a type of scattering that occurs when a particle diameter of particles is about the same as a wavelength region of light, does not depend on a wavelength of the light, and the light of all wavelengths is scattered in the same way, and thus the particles are visible as white.

It is known that when the particle diameter of the particles becomes smaller than the wavelength range of visible light, Rayleigh scattering becomes more dominant than Mie scattering. Rayleigh scattering occurs when a particle diameter of particles is sufficiently smaller than a wavelength of light. As described above, Mie scattering occurs independently of the wavelength of the light. In contrast, Rayleigh scattering is affected by the wavelength of the light. Light having a short wavelength hits the particles more easily and is strongly scattered, but light having a longer wavelength hits the particles less easily and is scattered weakly.

When a particle diameter of the titanium oxide particles becomes small, contribution of Rayleigh scattering becomes larger than that of Mie scattering, and thus an amount of scattering of the light having the long wavelength (reddish color) among visible light becomes small, and scattering of the light having the short wavelength (purple to bluish color) becomes dominant. Therefore, when the white image is formed with the white ink using the titanium oxide particles having the small particle diameter, the scattering of the light having the short wavelength, that is, the bluish color due to Rayleigh scattering increases in the white image, and as a result, it is considered that the white image tends to be bluish.

Here, in the titanium oxide particles, the average particle diameter (primary particle diameter) at which intensity of Mie scattering is maximum is about 300 nm. Therefore, it is considered that as the average particle diameter becomes smaller than 300 nm, an influence of Mie scattering decreases and an influence of Rayleigh scattering becomes stronger. Therefore, although depending on various conditions, in the white pigment in which the average particle diameter of the titanium oxide particles is 200 nm or less, a situation occurs in which the influence of Rayleigh scattering becomes large enough to be visible, and thus it is considered that the white image is bluish. In particular, when the average particle diameter of the titanium oxide particles is 100 nm or less, the white image tends to be more bluish.

A reason why the cracks are likely to occur in the white image is considered to be that as the average particle diameter of the titanium oxide particles becomes smaller, fluidity of the titanium oxide particles in a coating film (white image) formed on the cloth material using the white ink becomes higher. When the fluidity of the titanium oxide particles in the coating film is increased, as evaporated components such as water, which is the solvent of the white ink, evaporate, the coating film tends to shrink due to aggregation, and this shrinkage tends to cause deformation or destruction of the coating film. As a result, it is considered that the cracks are more likely to occur in the white image.

On the other hand, reducing the average particle diameter of the titanium oxide particles is advantageous in that the precipitation of the titanium oxide particles in the white ink can be effectively prevented. Therefore, as described above, titanium oxide particles having an average particle diameter of more than 10 nm and 200 nm or less are particularly preferably used as the white pigment used in the white ink. Therefore, as a result of intensive studies performed by the present inventors, by containing the cationic polymer or 0.5% by mass or more and 8% by mass or less of the organic acid in the pretreatment liquid, occurrence of the blueness and the crack in the white image can be effectively prevented or avoided, as will be described later.

The white ink used in the present disclosure may contain a color material other than the titanium oxide particles, for example, other white pigments, if necessary. Since the titanium oxide particles generally have a high refractive index, the titanium oxide particles can achieve good whiteness compared to other white pigments. However, from the viewpoint of forming a suitable white image as a base layer on the image forming surface of the cloth material 30, another white pigment may be blended to some extent with the titanium oxide particles. Examples of the other white pigment include zirconium oxide, zinc sulfide, zinc oxide, barium sulfate, anhydrous calcium silicate, talc, chalk, alumina white, and silica.

The solvent of the white ink used in the present disclosure may be water similarly to the pretreatment liquid described above. The water used as the solvent may be any water as long as the water has relatively high purity as described above, and examples thereof generally include ion exchanged water, ultrafilter water, reverse osmosis water, and distilled water. As described above, the water having high purity may be pure water or ultrapure water.

In the white ink used in the present disclosure, a content of the titanium oxide particles is not particularly limited, but regarding a representative content, when a total amount of the white ink containing the titanium oxide particles and water is 100% by mass, a lower limit of the content of the titanium oxide particles may be 5.0% by mass or more, may be 7.0% by mass or more, or may be 8.0% by mass or more. Further, an upper limit of the content of the titanium oxide particles may be 20.0% by mass or less, may be 15.0% by mass or less, and may be 13.0% by mass or less.

When the content of the titanium oxide particles is less than 5.0% by mass, the white ink may become too thin, and the good white image tends not to be formed even if the white ink is applied after the pretreatment liquid is applied. On the other hand, when the content of the titanium oxide particles exceeds 20.0% by mass, the white ink may become too dark, resulting in an unnecessarily high viscosity or a decrease in discharge stability from the discharge head 13. If the amount of titanium oxide particles is too large compared to the amount of aggregating agent contained in the pretreatment liquid, good aggregation cannot be achieved, which may affect the quality of the white image.

The white ink used in the present disclosure may contain other components in addition to the titanium oxide particles and the water. Specifically, examples of the other components include various additives known in the ink used by the ink jet method. Specific examples of the additive include, but are not particularly limited to, a wet agent, a resin component, a penetrating agent, a surfactant, a preservative, a corrosion inhibitor, a pH adjuster, a dispersant, a viscosity modifier, and a defoaming agent. A content of the other components is not particularly limited, and a content generally used in the field of an inkjet ink can be adopted.

The white ink used in the present disclosure may contain a wet agent as the additive. By containing the wet agent, wettability of the white ink can be further improved. Specific examples of the wet agent include a water-soluble organic solvent.

Specific examples of the water-soluble organic solvent include, but are not particularly limited to, lower alcohols such as ethanol, 1-propanol (n-propyl alcohol), 2-propanol (isopropyl alcohol, IPA), 1-butanol (n-butyl alcohol), 2-butanol (sec-butyl alcohol), 2-methyl-1-propanol (isobutyl alcohol), and 2-methyl-2-propanol (tert-butyl alcohol); polyhydric alcohols such as glycerol (glycerin), trimethylolpropane, and trimethylolethane; alkylene glycols such as ethylene glycol, propylene glycol, butylene glycol, diethylene glycol, triethylene glycol, dipropylene glycol, tripropylene glycol, thiodiglycol, and hexylene glycol, or polyethers; polyalkylene glycols such as polyethylene glycol and polypropylene glycol; amides such as dimethylformamide, diethylformamide, dimethylacetamide, 2-pyrolidone, and N-methyl-2-pyrolidone; ketones such as acetone, methyl ethyl ketone, diethyl ketone, and cyclohexanone; ketoalcohols such as diacetone alcohol; ethers such as tetrahydrofuran and dioxane; and 1,3-dimethyl-2-imidazolidinone (DMI). These water-soluble organic solvents may be used alone or in an appropriate combination of two or more thereof. In Examples to be described below, propylene glycol is used as the wet agent.

A content of the wet agent (water-soluble organic solvent) in the white ink is not particularly limited. As a representative content, when the total amount of the white ink is 100% by mass, a lower limit of the content of the wet agent may be 5% by mass or more, may be 10% by mass or more, or may be 15% by mass or more. An upper limit of the content of the wet agent may be 40% by mass or less, may be 30% by mass or less, or may be 20% by mass or less.

When the content of the wet agent is less than 5% by mass, an operation and effect of blending the wet agent may not be sufficiently achieved although depending on various conditions. On the other hand, when the content of the wet agent is more than 40% by mass, an operation and effect commensurating with a blending amount (content) thereof may not be achieved, and the content of the wet agent becomes too large relative to the water as the main solvent, which may affect physical properties of the white ink.

The white ink used in the present disclosure may contain a resin component as the additive. When the white ink contains the resin component, it is possible to improve physical strength (for example, to impart rubbing resistance) in the formed white image. A specific configuration of the resin component is not particularly limited, but as long as the white ink is applied to the cloth material by the inkjet method, for example, resin particles can be adopted as the resin component.

Therefore, in the present disclosure, when the white ink contains, for example, resin particles as the resin component, the white ink may be a composition in which both the titanium oxide particles and the resin particles are dispersed in an aqueous solvent containing water as a main component. When the resin particles are made of a water-soluble resin as described below, the resin particles may be dissolved in the aqueous solvent.

A specific material of the resin component contained in the white ink is not particularly limited, and examples thereof include known resins usable in general ink jet inks. By blending such a resin component, for example, good fixability can be imparted when the white ink is applied to the cloth material 30.

Specific examples of the resin used as the resin particles include, but are not particularly limited to, acrylic resins such as an acrylic resin, a methacrylic resin, and styrene acrylic resin; polyolefin-based resins such as a polyolefin resin and polyolefin wax; naturally derived resins such as a rosin modified resin and a terpene resin; urethane-based resins such as various urethane resins and an acrylic urethane copolymer; condensation type resins such as a polyester resin and a polyamide resin; various epoxy resins; and vinyl resins such as a vinyl chloride resin, a vinyl chloride-vinyl acetate copolymer, and an ethylene vinyl acetate resin. These resins may contain a fluorene structure. These resins may be used alone as the resin component or in an appropriate combination of two or more thereof as the resin component.

In the present disclosure, a form of the resin component contained in the white ink is not particularly limited, but typically includes the resin particles as described above. At this time, a specific structure of the resin particles is not particularly limited either. For example, the resin particles may be formed by using only one type of the known resins described above, or may be formed by combining two or more types of the resins described above. Here, the case in which the resin particles are formed by combining two or more types of resins includes a case in which the resin particles are formed by using two or more types of resins as a polymer blend or a polymer alloy, and a case in which the resin particles are formed by forming a plurality of layers of two or more types of the resins. Further, as the resin component, one type of the resin particles may be used, or two or more types of the resin particles may be used in combination.

More specific examples of the material of the resin component include a urethane resin (polyurethane or a derivative thereof or a copolymer thereof). The urethane resin can be suitably used as a component of the white ink particularly disclosed in the present disclosure since a flexible and tough film structure can be generally formed when the urethane resin is applied to the base material as the dispersion, for example. In Examples to be described later, resin particles made of a commercially available urethane resin (product name: TAKELAC W6061, manufactured by Mitsui Chemicals, Inc.) or resin particles made of an acrylic urethane high polymer (product name: Movinyl 6763, manufactured by Japan Coating Resin Corp.) are used.

In the present disclosure, when the resin component is the resin particles, a specific particle diameter of the resin particles is not particularly limited, and can be appropriately selected depending on various conditions. A typical particle diameter for dispersion or suspension of the resin particles includes, for example, a volume average particle diameter MV measured using a particle size analyzer (Micro Track Series manufactured by MicrotracBEL Corp.). Regarding a representative range of the volume average particle diameter of the resin particles, for example, a lower limit may be 10 nm or more, or may be 20 nm or more. An upper limit may be 500 nm or less, may be 200 nm or less, may be 100 nm or less, or may be 50 nm or less.

In the present disclosure, it is not essential to contain the resin component in the white ink, and when the resin component is contained, a content thereof is not particularly limited. As a representative content, when the total amount of the white ink is 100% by mass, a lower limit of the content of the resin component may be 1.0% by mass or more, or may be 5.0% by mass or more. An upper limit of the content of the resin component may be 30.0% by mass or less, may be 20.0% by mass or less, or may be 12.0% by mass or less.

When the content of the resin component is less than 1.0% by mass, an operation and effect of blending the resin component may not be sufficiently achieved although depending on various conditions. On the other hand, when the content of the resin component exceeds 30.0% by mass, an operation and effect commensurating with a blending amount (content) thereof may not be achieved, the content of the resin component becomes too large, and viscosity of the white ink may increase, which may affect the discharge from the discharge head 13.

The white ink used in the present disclosure may contain a penetrating agent as the additive. By containing the penetrating agent, penetrability of the white ink into the absorbent base material (cloth material) can be further improved. Specific examples of the penetrating agent include glycol ethers.

Specific examples of the glycol ethers include, but are not particularly limited to, ethylene glycol ethers such as ethylene glycol methyl ether, ethylene glycol ethyl ether, ethylene glycol monopropyl ether, diethylene glycol methyl ether, diethylene glycol ethyl ether, diethylene glycol monopropyl ether, diethylene glycol monobutyl ether, diethylene glycol monohexyl ether, and triethylene glycol methyl ether, triethylene glycol monopropyl ether, and triethylene glycol monobutyl ether; and propylene glycol ethers such as propylene glycol methyl ether, propylene glycol ethyl ether, propylene glycol monopropyl ether, propylene glycol monobutyl ether, dipropylene glycol methyl ether, dipropylene glycol ethyl ether, dipropylene glycol monopropyl ether, dipropylene glycol monobutyl ether, tripropylene glycol methyl ether, tripropylene glycol ethyl ether, tripropylene glycol monopropyl ether, and tripropylene glycol monobutyl ether. These glycol ethers may be used alone or in an appropriate combination of two or more thereof. In Examples to be described below, triethylene glycol monobutyl ether is used as the penetrating agent.

A content of the penetrating agent (glycol ethers) in the white ink is not particularly limited. The white ink may not contain the penetrating agent, but in the case of containing the penetrating agent, as a representative content, a lower limit of the content of the penetrating agent may be more than 0% by mass, may be 0.5% by mass or more, or 1% by mass or more when the total amount of the white ink is 100% by mass. Further, the upper limit of the content of the penetrating agent may be 20% by mass or less, may be 10% by mass or less, or may be 5% by mass or less.

When the content of the penetrating agent in the white ink is more than 20% by mass, an operation and effect commensurating with a blending amount (content) thereof may not be achieved, and the content of the penetrating agent becomes too large relative to the water as the main solvent, which may affect the physical properties of the white ink.

The white ink used in the present disclosure may contain a surfactant as the additive. Specific examples of the surfactant include an acetylene glycol-based surfactant. The acetylene glycol-based surfactant is a nonionic surfactant having a structure in which an acetylene group is located at a center of a molecular structure and which is symmetrical with respect to the acetylene group.

Specific examples of the acetylene glycol-based surfactant include a commercially available surfactant. Examples thereof include, but are not particularly limited to, surfynol (registered trademark) series such as a product name: surfynol (registered trademark) 440, a product name: surfynol (registered trademark) 465, and a product name: surfynol (registered trademark) 485 manufactured by Evonik Industries; olfine (registered trademark) series such as a product name: olfine (registered trademark) E1004, a product name: olfine (registered trademark) E1008, and a product name: olfine (registered trademark) E1010 manufactured by Nissin Chemical Industry Co., Ltd.; acetylenol (registered trademark) series such as a product name: acetylenol (registered trademark) E40 and a product name: acetylenol (registered trademark) E100 manufactured by Kawaken Fine Chemicals Co.Ltd.

A content of the surfactant in the white ink is not particularly limited. The white ink may not contain the surfactant, but in the case of containing the surfactant, as a representative content thereof, when the total amount of the white ink is 100% by mass, a lower limit of the content of the surfactant may be more than 0% by mass. Further, an upper limit of the content of the surfactant may be 4% by mass or less, may be 2% by mass or less, or may be 1% by mass or less.

When the content of the surfactant in the white ink is more than 4% by mass, an operation and effect commensurating with a blending amount (content) thereof may not be achieved, and the content of the surfactant becomes too large relative to the water as the main solvent, which may affect the physical properties of the white ink.

The white ink used in the present disclosure may further contain a pH adjuster as the additive. Specific examples of the pH adjuster include, but are not particularly limited to, metal hydrogenphosphates such as potassium dihydrogenphosphate and disodium hydrogenphosphate; alkali metal hydroxides such as sodium hydroxide, lithium hydroxide, and potassium hydroxide; metal carbonates such as potassium carbonate, sodium carbonate, and sodium hydrogen carbonate; and ammonia or amine compounds such as ammonia, diethanolamine, triethanolamine, and triisopropanolamine. These pH adjusters may be used alone or in an appropriate combination of two or more thereof.

In the present disclosure, it is not essential to contain the pH adjuster in the white ink, and when the pH adjuster is contained, a content thereof is not particularly limited. A representative content is not particularly limited, and the pH adjuster may be blended within a range that can achieve the desired pH in the white ink and does not impair the physical properties of the white ink.

The white ink used in the present disclosure may further contain a preservative or an antifungal agent as the additive. Specific examples of the preservative or the antifungal agent include sodium benzoate, sodium pentachlorophenol, 2-pyridinethiol 1-oxide sodium, sodium sorbate, sodium dehydroacetate, and 1,2-dibendisothiazolin-3-one. Examples of commercially available preservatives and antifungal agents include, but are not particularly limited to, Proxel (registered trademark) series such as a product name: Proxel (registered trademark) XL2 and a product name: Proxel (registered trademark) GXL manufactured by SC Johnson; and a product name: Denicide CSA and a product name: NS-500W manufactured by Nagase ChemteX Corporation.

In the present disclosure, it is not essential to contain the preservative or the antifungal agent in the white ink, and when the preservative or the antifungal agent is contained, a content thereof is not particularly limited. A representative content is not particularly limited, and the preservative or the antifungal agent may be blended within a range that can achieve a desired antiseptic or antifungal effect in the white ink and does not impair the physical properties of the white ink.

The white ink used in the present disclosure may further contain a corrosion inhibitor as the additive. Specific examples of the corrosion inhibitor include, but are not particularly limited to, benzotriazole. In the present disclosure, it is not essential to contain the corrosion inhibitor in the white ink, and when the corrosion inhibitor is contained, a content thereof is not particularly limited. A representative content is not particularly limited, and the corrosion inhibitor may be blended within a range that can achieve an anticorrosive property in the white ink and does not impair the physical properties of the white ink.

The white ink used in the present disclosure may contain an organic solvent other than the organic solvents blended as the additives such as a wet agent, a penetrating agent, a surfactant, or a thickening agent. Such an organic solvent can be positioned as an "auxiliary solvent" with respect to the water as the main solvent. Specific examples of the organic solvent include, but are not particularly limited to, ethanol. A content of the organic solvent as the auxiliary solvent is also not particularly limited.

A method for producing the white ink used in the present disclosure is not particularly limited, and similarly to the pretreatment liquid described above, the titanium oxide particles and the water, which are essential components, and the organic solvent and a dispersion resin, which are suitable components, may be blended in a predetermined ratio and stirred and mixed by a known method.

However, since the titanium oxide particles are not dissolved in the water, as described above, the white ink is in a state of the dispersion or the suspension in which fine particles of the titanium oxide particles are dispersed in the water. Therefore, as the precipitation property of the white ink is evaluated in Examples to be described later, when the white ink is left standing, the titanium oxide particles tend to precipitate. Therefore, in the method for producing the white ink, in order to enable good redispersion of the precipitated titanium oxide particles, a production method is suitably adopted that allows the titanium oxide particles to be even better dispersed in the water.

Specifically, examples thereof include a method in which a mill base is prepared by mixing the titanium oxide particles, the water, and the other components as necessary by a known method and thoroughly stirring a mixture, and the mill base is further dispersed using a paint shaker, a ball mill, a bead mill, an attritor, a sand mill, a horizontal media mill, a colloid mill, a roll mill, a homogenizer, an ultrasonic disperser, a stirring blade stirrer, a magnetic stirrer, or the like. In this production process, whether the titanium oxide particles are well dispersed in the obtained dispersion may be checked by, for example, a laser diffraction scattering method, or the obtained dispersion may be filtered in consideration of residual secondary particles or the like which are not sufficiently dispersed.

### [Base Material and Image Formation]

In the present disclosure, the base material to be subjected to the image formation is the cloth material as described above, and a specific type of the cloth material is not particularly limited, but representative examples thereof include a knitted fabric (knit) and a woven fabric (texture). A specific type of the knitted fabric is not particularly limited, and examples thereof include representative knitted fabrics such as plain knitting, waffle knitting, milling knitting, dappled weave, honeycomb mesh, and polyester mesh (mesh using a polyester material). A specific type of the woven fabric is not particularly limited, and examples thereof include representative woven fabrics such as plain weave, twill weave, and sateen weave.

A specific type of a fiber used for the cloth material is not particularly limited, but in the present disclosure, as will be described later, suitable fibers include cotton, silk, hemp, rayon, acetate, nylon, polyester, and a mixture thereof, since at least the white image is heated to be fixed on the cloth material. In Examples to be described later, a polyester knitted fabric used for a commercially available T-shirt is used as the cloth material.

A method for forming the image on the cloth material by the ink jet method can be divided into a wet on dry method and a wet on wet method depending on the process. In the wet on dry method, the pretreatment liquid is applied to the cloth material which is the base material, the cloth material is then sufficiently dried, the white ink is applied to a region where the pretreatment liquid is applied to form the white image, and the cloth material is heated and dried to fix the white image to the cloth material. On the other hand, in the wet on wet method, the pretreatment liquid is applied to the cloth material which is the base material, the white ink is applied on the region where the pretreatment liquid is applied without sufficiently drying the cloth material (as a state in which the cloth material is not dried to the same extent as a dry state of the cloth material in the wet on dry method) to form the white image, and the cloth material is heated and dried to fix the white image and the pretreatment liquid to the cloth material.

Both the wet on dry method and the wet on wet method have different characteristics, and any method can be appropriately selected according to various conditions such as a type of the cloth material, a shape of the cloth material, a type of the formed image, and a type of the ink. In the present disclosure, the wet on wet method is adopted.

The image forming method performed using the pretreatment liquid according to the present disclosure includes: the pretreatment liquid application step of applying an aqueous pretreatment liquid to the cloth material when the image is formed on the cloth material which is the absorbent base material; a heating step of heating the applied pretreatment liquid; and an image forming step of forming the image by discharging the ink to the cloth material by the ink jet method after the heating step. As described above, at least the white ink containing the titanium oxide particles having the average particle diameter of more than 10 nm and 200 nm or less as the white pigment is used as the ink.

In such a white ink, since specific gravity of the titanium oxide particles as the color material (pigment) is large, the precipitation speed becomes fast. Therefore, when the average particle diameter of the titanium oxide particles is decreased, the precipitation speed thereof can be decreased. However, as described above, when the particle diameter of the titanium oxide particles is made smaller, the whiteness of the formed white image tends to decrease.

In the white ink used in the ink jet method, titanium oxide particles having an average particle diameter of about 300 nm are generally used in many cases. According to Stokes theorem, the precipitation speed is proportional to the square of a particle size, so the larger the particle diameter, the easier the titanium oxide particles precipitate. The titanium oxide particles having the particle diameter of about 300 nm tend to easily precipitate. Therefore, by using the titanium oxide particles of which the average particle diameter is within a range of more than 10 nm and 200 nm or less, it is possible to prevent the precipitation of the titanium oxide particles while the whiteness is maintained.

However, when the base material to which the white ink is applied (image forming object or printing object) is the cloth material, the smaller the average particle diameter of the titanium oxide particles, the easier the titanium oxide particles penetrate into the cloth material in the thickness direction. In particular, when the average particle diameter of the titanium oxide particles is in the range of more than 10 nm and 200 nm or less, the titanium oxide particles more easily penetrate. When the titanium oxide particles are suitably aggregated on the base material, the white image having the good whiteness can be formed. Therefore, when the titanium oxide particles penetrate into the cloth material, the good white image cannot be formed.

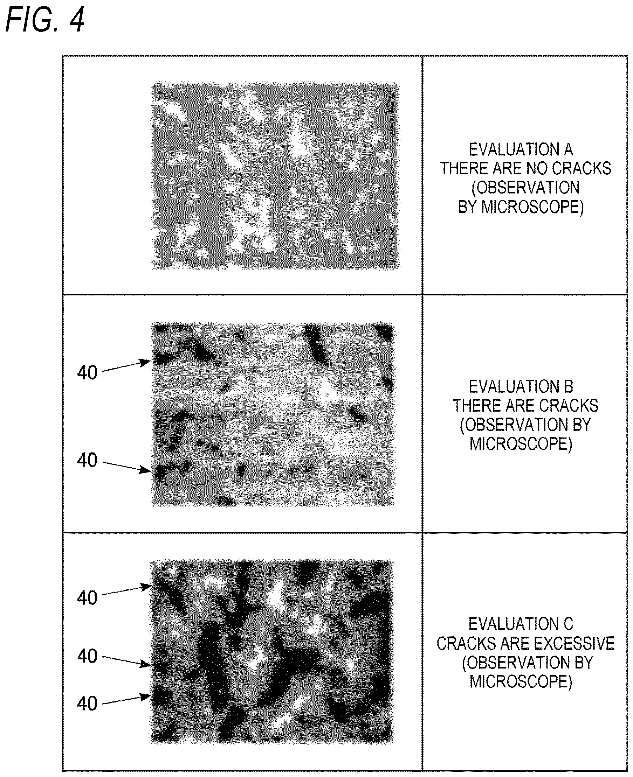

Further, it is clear that when the base material is the cloth material and the average particle diameter of the titanium oxide particles is less than 200 nm, cracks 40 (black portions) are likely to occur in the formed white image as shown in FIG. 4. When the occurrence of the cracks 40 is increased, the image quality of the white image is significantly reduced, and thus the image quality of the color image formed on the white image is further reduced. Therefore, a state in which many cracks 40 are visually observed as indicated by "EVALUATION C" in FIG. 4 should be avoided, and at least, it is necessary to achieve a state in which cracks 40 are visually observed but the number of cracks is not excessive as indicated by "EVALUATION B" in FIG. 4. In "EVALUATION A" shown in FIG. 4, no crack occurs. Specific evaluation shown in FIG. 4 will be described in the following Examples.

From the above-mentioned reason for the occurrence of the cracks, it is usually assumed that the occurrence of cracks in the ink image formed on the base material, that is, the coating film of the ink, is caused by heating and drying during fixing. Therefore, in order to avoid or prevent the cracking of the white image, it is conceivable to adjust conditions of the heating and drying such that the white ink does not dry rapidly, or to change a composition of the white ink such that rapid drying does not proceed.

However, as a result of the intensive studies performed by the present inventors, the present inventors have focused on a composition of the pretreatment liquid instead of the composition of the white ink, and have uniquely found that one containing the cationic polymer or an organic acid containing 0.5% by weight or more and 8% by weight or less is used as the pretreatment liquid. Accordingly, even when the white pigment used in the white ink is the titanium oxide particles having the average particle diameter of more than 10 nm and 200 nm or less, it is possible to effectively prevent or avoid the occurrence of the blueness and the crack in the formed white image. As a result, it is possible to achieve the good whiteness in the white image formed on the cloth material which is the absorbent base material.

In addition, it is clear that, since the pretreatment liquid contains the quaternary ammonium salt together with the cationic polymer, the white image formed on the cloth material is prevented from becoming excessively hard as shown in Examples to be described later, and the blueness of the white image can be prevented. Therefore, when the white image is formed using the pretreatment liquid according to the present disclosure, it is possible to achieve a good feeling of tension on the cloth material on which the white image is formed, and it is also possible to improve the occurrence of the blueness of the white image.

As described above, it is considered that the cationic polymer or a predetermined amount of the organic acid acts as a good aggregating agent for titanium oxide particles having an average particle diameter of less than 200 nm. It is considered that when the titanium oxide particles are preferably aggregated by these compounds, the contribution of Rayleigh scattering is reduced and the contribution of Mie scattering is increased in the formed white image, and thus the occurrence of the blueness in the white image can be effectively prevented or avoided.

It is considered that when these compounds aggregate the titanium oxide particles well, thereby excessive densification of the titanium oxide particles in the coating film of the white ink is prevented or avoided, the coating film is less likely to shrink when the white ink is dried, and the occurrence of the cracks in the white images can be effectively prevented or avoided.

In addition, as shown in Examples to be described later, in the present disclosure, the pretreatment liquid contains the cationic polymer or the organic acid, but as compared with cases (Comparative Examples 3 and 4) in which the pretreatment liquid contains only the quaternary ammonium salt and does not contain the cationic polymer and the organic acid, it is fond that the good whiteness can be achieved in the white image. Further, compared with cases (Comparative Examples 5 to 7) in which the pretreatment liquid contains the polyvalent metal salt, it is fond that the occurrence of the crack can be favorably prevented in the white image.

The present disclosure includes the image forming pretreatment liquid having the above-described configuration and the ink set using the pretreatment liquid, and further includes the image forming method using the pretreatment liquid having the above-described configuration.

That is, the image forming method according to the present disclosure may include the image forming step of forming, using the ink, the image on the cloth material which is the absorbent base material, and the pretreatment liquid application step of applying the pretreatment liquid to the cloth material before the image forming step, in which one containing the cationic polymer or the organic acid of 0.5% by weight or more and 8% by weight or less is used as the pretreatment liquid.

In the image forming method according to the present disclosure, the image forming step includes the image formation (that is, formation of the white image) using the white ink containing the titanium oxide particles having the average particle diameter of more than 10 nm and 200 nm or less as the ink. Further, the image forming step may include image formation on the white image using the color ink.

Further, in the present disclosure, in the pretreatment liquid application step, the pretreatment liquid may be applied to the cloth material in an amount of 30 mg/cm² or more. When the application amount of the pretreatment liquid is 30 mg/cm² or more, a sufficient amount of the cationic polymer or the organic acid remains on the cloth material which is the absorbent base material when the white image is formed in the image forming step. Therefore, it is possible to effectively prevent or avoid the occurrence of the blueness and the crack in the formed white image, to improve the quality of the white image, and to achieve a better feeling of tension in the cloth material.

### [Examples]

The present invention will be described more specifically based on Examples and Comparative Examples, but the present invention is not limited thereto. Those skilled in the art can make various changes, corrections, and modifications without departing from the scope of the present disclosure.

Compositions of the pretreatment liquid and the white ink, application conditions, and evaluation associated with the image formation in the following Examples and Comparative Examples are as follows.

### (Components of Pretreatment Liquid and White Ink)

Specific components of the pretreatment liquid and the white ink in Examples and Comparative Examples are summarized in Table 1. In particular, regarding the cationic polymer and the quaternary ammonium among the aggregating agent used in the pretreatment liquid, abbreviations shown in Table 1 are used. Similarly, an abbreviation shown in Table 1 is used for the resin particles used in the white ink.

**[Table 1]**

| | Component | Type | Abbreviation |
|---|---|---|---|
| Aggregating agent | Organic acid | Formic acid | - |
| | | Acetic acid | - |
| | | Lactic acid | - |
| | Cationic polymer | Unisense FPA100LU [Product name, manufactured by Senka Corp.] | PAM1 |
| | | PAS-M-1A [Product name, manufactured by NITTOBO MEDICAL CO.,LTD.] | PAM2 |
| | | PAS-92A [Product name, manufactured by NITTOBO MEDICAL CO.,LTD.] | PAM3 |
| | Quaternary ammonium salt | Tetraalkyl quaternary ammonium salt | 4AM |
| Resin particle | | TAKELAC W6061 [Product name, manufactured by Mitsui Chemicals, Inc.] | PU |
| | | Movinyl 6763 [Product name, manufactured by Japan Coating Resin Corp.] | PAc |
| Wet agent | | Propylene glycol (PG) | - |
| Penetrating agent | | Triethylene glycol monobutyl ether (BTG) | - |
| Surfactant | | Olfine E1004 [Product name, manufactured by Nissin Chemical Industry Co., Ltd.] | - |

### (Average Particle Diameter of Pigment for White Ink)

An average particle diameter of a titanium oxide (TiO₂) particle used in the white ink was determined by diluting the titanium oxide pigment such that a concentration of the pigment was 0.1% by mass, measuring scattered light intensity with a dynamic scattering type particle size distribution measuring device (product name: LB-550, manufactured by HORIBA, Ltd.,), and calculating the average particle diameter by a photon correlation method based on the measured scattered light intensity.

### (Pigment Precipitation Property of White Ink)

Into a sample tube having an inner diameter of 15 mm was dispensed 10 mL of the white ink prepared in each of Examples or Comparative Examples, and the white ink was stored for one week at 25°C and then visually evaluated for a precipitation tendency. A case in which no precipitation was visually observed was evaluated as "AA", a case in which slight precipitation was observed was evaluated as "A", a case in which precipitation was clearly visible was evaluated as "B", and a case in which a very large amount of precipitation was observed was evaluated as "C".

### (Application Amount of Pretreatment Liquid or White Ink)

In each of Examples and Comparative Examples, a mass of the cloth material (polyester knit) before the application of the pretreatment liquid or the white ink was measured and set as a reference value M0, a mass of the cloth material after the application of the pretreatment liquid or the white ink or after the application of the pretreatment liquid and before the application of the white ink was measured and set as a measurement value M1, and the application amount of the pretreatment liquid or the white ink were evaluated by dividing a subtraction value M2 (M2 = M1 - M0) obtained by subtracting the reference value M0 from the measurement value M1 by an area Sa of the cloth material (M2/Sa).

### (Whiteness of White Image)

Brightness L* of the white image formed on the cloth material in each of Examples and Comparative Examples was measured using a spectral colorimeter (product name: eXact, manufactured by X-Rite, Inc.) under conditions of a measurement field of view of 10°, a white reference Abs (absolute white), and a light source D65.

When L* was 85 or more (L* ≥ 85), the whiteness of the white image was evaluated as "A+", when L* was 80 or more and less than 85 (80 ≤ L* < 85), the whiteness was evaluated as "A", when L* was 70 or more and less than 80 (70 ≤ L* < 80), the whiteness was evaluated as "B", when L* was 60 or more and less than 70 (60 ≤ L* < 70), the whiteness was evaluated as "C", when L* was 50 or more and less than 60 (50 ≤ L* < 60), the whiteness was evaluated as "D", and when L* was less than 50 (L* < 50), the whiteness was evaluated as "E".

### (Blueness of White Image)

The b* of the white image formed on the cloth material in each of Examples and Comparative Examples was measured using a spectral colorimeter (product name: eXact, manufactured by X-Rite, Inc.) under conditions of a measurement field of view of 10°, a white reference Abs (absolute white), and a light source D65.

When b* was -5 or more (b* ≥ -5), the blueness of the white image was evaluated as "A", when b* was -10 or more and less than -5 (-10 ≤ b* < -5), the blueness was evaluated as "B", and when b* was less than -10 (b* < -10), the blueness was evaluated as "C".

### (Crack of White Image)

The crack of the white image formed on the cloth material in each of Examples and Comparative Examples was evaluated by a sensory test by visually observing the white image using a microscope. FIG. 4 illustrates representative states of the white image. In each of Examples and Comparative Examples, the white image is formed on a plain black cloth material as described later, and therefore the crack 40 is observed as a black portion indicated by an arrow. As shown in FIG. 4, a state in which no cracks 40 (black portion) was observed in the white image (there are no cracks) was evaluated as "A", a state in which a crack 40 (black portion) was observed in a part of the white image (there are cracks) was evaluated as "B", and a state in which significant cracks 40 (black portion) was observed over the entire white image (cracks are excessive) was evaluated as "C", thereby evaluating the crack of the white image.

### (Hardness of Cloth Material)

The cloth material on which the white image was formed in each of Examples and Comparative Examples was gripped by a hand at an angle of approximately +45° with respect to the horizontal, and in this state, a degree of pliability of the cloth material was sensory evaluated.

A case in which a cloth material was pliable like an original cloth material (blank) on which a white image is not formed (no pretreatment liquid was applied) was evaluated as "A", a case in which a cloth material was not pliable was evaluated as "C", and a case in which a cloth material had pliability between "A" and "C" was evaluated as "B", thereby hardness of the cloth material was evaluated.

### (Example 1)

A pretreatment liquid according to Example 1 was prepared by blending and mixing an aggregating agent (formic acid) and water according to compositions shown in Table 2. Further, as shown in Table 2, a white ink according to Example 1 was prepared by blending and mixing titanium oxide (TiO₂) particles having an average particle diameter of 120 nm, resin particles of an abbreviation PU (product name: TAKELAC W6061) shown in Table 1, a wet agent, a penetrating agent, a surfactant, and water. A precipitation property of the titanium oxide particles in the white ink was evaluated by the above-described method. A result thereof is shown in Table 2. Contents of the resin particles abbreviated as PU in Table 2 as well as in Example 1 are all calculated in terms of a solid content.

As the cloth material, a cloth material obtained by cutting a commercially available plain black polyester T-shirt (product name: glimmer300ACT, manufactured by TOMS,Inc.) was used.

An evaluation sample according to Example 1 was prepared by placing the cloth material on glass, applying the pretreatment liquid in an application amount shown in Table 2, and leaving the cloth material to stand.

Thereafter, the white ink was applied to the evaluation sample according to Example 1 by spraying in an application amount shown in Table 2 in a manner of simulating application performed by an inkjet printer, and the white ink was fixed by heating at 100°C for 15 minutes. As shown in parentheses in Table 2, a ratio of the application amount of the pretreatment liquid to the application amount of the white ink is 4: 1. With respect to a white image of the evaluation sample, whiteness, blueness, cracks, and hardness of the cloth material were evaluated by the above-described method. Results thereof are shown in Table 1.

### (Examples 2 to 6)

As shown in Table 2, white inks according to Examples 2 to 6 were prepared in the same manner as in Example 1, and precipitation properties were evaluated by the above-described method. Results thereof are shown in Table 2. Further, as shown in Table 2, pretreatment liquids according to Examples 2 to 6 were prepared in the same manner as in Example 1 except that the content of formic acid as the aggregating agent was changed to 0.7 to 8 parts by mass.

By using the pretreatment liquids and the white inks according to Examples 2 to 6, evaluation samples according to Examples 2 to 6 were prepared in the same manner as in Example 1 as shown in Table 2. Whiteness, blueness, and cracks of a white image and hardness of a cloth material of each of the evaluation samples were evaluated by the above-described method. Results thereof are shown in Table 2.

### (Examples 7 and 8)

As shown in Table 2, a white ink according to Example 7 or 8 was prepared in the same manner as in Example 1, and a precipitation property was evaluated by the above-described method. Results thereof are shown in Table 2. Further, as shown in Table 2, a pretreatment liquid according to Example 7 or 8 was prepared in the same manner as in Example 1 except for the following points. In Example 7, 1.5 parts by mass of acetic acid was used as the aggregating agent, and in Example 8, 1.5 parts by mass of lactic acid was used as the aggregating agent.

By using the pretreatment liquid and the white ink according to Example 7 or 8, an evaluation sample according to Example 7 or 8 was prepared in the same manner as in Example 1 as shown in Table 2. Whiteness, blueness, and cracks of a white image and hardness of a cloth material of each of the evaluation samples were evaluated by the above-described method. Results thereof are shown in Table 2.

### (Examples 9 to 11)

As shown in Table 2, white inks according to Examples 9 to 11 were prepared in the same manner as in Example 1, and precipitation properties were evaluated by the above-described method. Results thereof are shown in Table 2. Further, as shown in Table 2, pretreatment liquids according to Examples 9 to 11 were prepared in the same manner as in Example 1 except for the following points. In Example 9, a cationic polymer abbreviated as PAM1 (product name: Unisense FPA100LU) shown in Table 1 was used as the aggregating agent, and a content thereof was 2 parts by mass as shown in Table 2. In Example 10, as the aggregating agent, a content of the abbreviation PAM1 was 5 parts by mass. In Example 11, as the aggregating agent, a content of the abbreviation PAM1 was 10 parts by mass. Contents of the aggregating agents abbreviated as PAM1 shown in Table 2 as well as Examples 9 to 11 are all calculated in terms of a solid content.

By using the pretreatment liquids and the white inks according to Examples 9 to 11, evaluation samples according to Examples 9 to 11 were prepared in the same manner as in Example 1 as shown in Table 2. Whiteness, blueness, and cracks of a white image and hardness of a cloth material of each of the evaluation samples were evaluated by the above-described method. Results thereof are shown in Table 2.

### (Examples 12 and 13)

As shown in Table 2, a white ink according to Example 12 or 13 was prepared in the same manner as in Example 1, and a precipitation property was evaluated by the above-described method. Results thereof are shown in Table 2. Further, as shown in Table 2, a pretreatment liquid according to Example 12 or 13 was prepared in the same manner as in Example 1 except for the following points. In Example 12, a cationic polymer abbreviated as PAM2 (product name: PAS-M-1A) shown in Table 1 was used as the aggregating agent, and a content thereof was 2 parts by mass as shown in Table 2. In Example 13, as the aggregating agent, a content of the abbreviation PAM2 was 5 parts by mass. Contents of the aggregating agents abbreviated as PAM2 shown in Table 2 as well as Examples 12 and 13 are all calculated in terms of a solid content.

By using the pretreatment liquid and the white ink according to Example 12 or 13, an evaluation sample according to Example 12 or 13 was prepared in the same manner as in Example 1 as shown in Table 2. Whiteness, blueness, and cracks of a white image and hardness of a cloth material of each of the evaluation samples were evaluated by the above-described method. Results thereof are shown in Table 2.

### (Examples 14 to 16)

As shown in Table 2, white inks according to Examples 14 to 16 were prepared in the same manner as in Example 1, and precipitation properties were evaluated by the above-described method. Results thereof are shown in Table 2. Further, as shown in Table 2, pretreatment liquids according to Examples 14 to 16 were prepared in the same manner as in Example 1 except for the following points. In Example 14, 1.5 parts by mass of formic acid and 2 parts by mass of a quaternary ammonium salt abbreviated as 4AM (product name: Antex SAG-25) shown in Table 1 were used in combination as the aggregating agent. In Example 15, 1.5 parts by mass of formic acid and 5 parts by mass of a cationic polymer abbreviated as PAM1 were used in combination as the aggregating agent. In Example 16, 1.5 parts by mass of formic acid and 5 parts by mass of a cationic polymer abbreviated as PAM2 were used in combination as the aggregating agent.

By using the pretreatment liquids and the white inks according to Examples 14 to 16, evaluation samples according to Examples 14 to 16 were prepared in the same manner as in Example 1 as shown in Table 2. Whiteness, blueness, and cracks of a white image and hardness of a cloth material of each of the evaluation samples were evaluated by the above-described method. Results thereof are shown in Table 2.

### (Example 17)

As shown in Table 2, a white ink according to Example 17 was prepared in the same manner as in Example 1, and a precipitation property was evaluated by the above-described method. A result thereof is shown in Table 2. Further, as shown in Table 2, a pretreatment liquid according to Example 17 was prepared in the same manner as in Example 1 except that 0.5 parts by mass of a quaternary ammonium salt abbreviated as 4AM and 5 parts by mass of a cationic polymer abbreviated as PAM1 were used in combination as the aggregating agent.

By using the pretreatment liquid and the white ink according to Example 17, an evaluation sample according to Example 17 was prepared in the same manner as in Example 1 as shown in Table 2. Whiteness, blueness, and cracks of a white image and hardness of a cloth material of the evaluation sample were evaluated by the above-described method. Results thereof are shown in Table 2.

### (Examples 18 to 20)

As shown in Table 2, white inks according to Examples 18 to 20 were prepared in the same manner as in Example 1, and precipitation properties were evaluated by the above-described method. Results thereof are shown in Table 2. Further, as shown in Table 2, pretreatment liquids according to Examples 18 to 20 were prepared in the same manner as in Example 17 except for the following points. In Example 18, 5 parts by mass of a cationic polymer abbreviated as PAM1 and 1 part by mass of a quaternary ammonium salt abbreviated as 4AM were used in combination as the aggregating agent. In Example 19, 5 parts by mass of a cationic polymer abbreviated as PAM1 and 2 parts by mass of a quaternary ammonium salt abbreviated as 4AM were used in combination as the aggregating agent. In Example 20, 5 parts by mass of a cationic polymer abbreviated as PAM1 and 5 parts by mass of a quaternary ammonium salt abbreviated as 4AM were used in combination as the aggregating agent.

By using the pretreatment liquids and the white inks according to Examples 18 to 20, evaluation samples according to Examples 18 to 20 were prepared in the same manner as in Example 17 as shown in Table 2. Whiteness, blueness, and cracks of a white image and hardness of a cloth material of each of the evaluation samples were evaluated by the above-described method. Results thereof are shown in Table 2.

### (Example 21)

As shown in Table 2, a white ink according to Example 21 was prepared in the same manner as in Example 1, and a precipitation property was evaluated by the above-described method. A result thereof is shown in Table 2. Further, as shown in Table 2, a pretreatment liquid according to Example 21 was prepared in the same manner as in Example 19 except that 2 parts by mass of a quaternary ammonium salt abbreviated as 4AM and 5 parts by mass of a polymer abbreviated as PAM2 were used in combination as the aggregating agent.

By using the pretreatment liquid and the white ink according to Example 21, an evaluation sample according to Example 21 was prepared in the same manner as in Example 19 as shown in Table 2. Whiteness, blueness, and cracks of a white image and hardness of a cloth material of the evaluation sample were evaluated by the above-described method. Results thereof are shown in Table 2.

### (Examples 22 and 23)

As shown in Table 2, a white ink according to Example 22 or 23 was prepared in the same manner as in Example 1, and a precipitation property was evaluated by the above-described method. A result thereof is shown in Table 2. Further, as shown in Table 2, a pretreatment liquid according to Example 22 or 23 was prepared in the same manner as in Example 14 except for the following points. In Example 22, 1.5 parts by mass of formic acid, 2 parts by mass of a quaternary ammonium salt abbreviated as 4AM, and 5 parts by mass of a cationic polymer abbreviated as PAM1 were used in combination as the aggregating agent. In Example 23, 1.5 parts by mass of formic acid, 2 parts by mass of a quaternary ammonium salt abbreviated as 4AM, and 5 parts by mass of a cationic polymer abbreviated as PAM2 were used in combination as the aggregating agent.

By using the pretreatment liquid and the white ink according to Example 22 or 23, an evaluation sample according to Example 22 or 23 was prepared in the same manner as in Example 14 as shown in Table 2. Whiteness, blueness, and cracks of a white image and hardness of a cloth material of the evaluation sample were evaluated by the above-described method. Results thereof are shown in Table 2.

### (Examples 24 and 25)

As shown in Table 2, a white ink according to Example 24 or 25 was prepared in the same manner as in Example 1 except for the following points. In Example 24, titanium oxide particles having an average particle diameter of 50 nm were used as the titanium oxide particles. In Example 25, titanium oxide particles having an average particle diameter of 200 nm were used as the titanium oxide particles. A precipitation property of each of the white inks was evaluated by the above-described method. Results thereof are shown in Table 2. Further, as shown in Table 2, a pretreatment liquid according to Example 24 or 25 was prepared (by using 5 parts by mass of a cationic polymer abbreviated as PAM1 and 2 parts by mass of a quaternary ammonium salt abbreviated as 4AM) in the same manner as in Example 19.

By using the pretreatment liquid and the white ink according to Example 24 or 25, an evaluation sample according to Example 24 or 25 was prepared in the same manner as in Example 19 as shown in Table 2. Whiteness, blueness, and cracks of a white image and hardness of a cloth material of the evaluation sample were evaluated by the above-described method. Results thereof are shown in Table 2.

### (Example 26)

As shown in Table 2, a white ink according to Example 26 was prepared in the same manner as in Example 1 except for the following points. In Example 26, a content of the titanium oxide particles in the white ink was 7.0 parts by mass. A precipitation property of the white ink was evaluated by the above-described method. A result thereof is shown in Table 2. Further, as shown in Table 2, a pretreatment liquid according to Example 26 was prepared in the same manner as in Example 19.

By using the pretreatment liquid and the white ink according to Example 26, an evaluation sample according to Example 26 was prepared in the same manner as in Example 19 as shown in Table 2. Whiteness, blueness, and cracks of a white image and hardness of a cloth material of the evaluation sample were evaluated by the above-described method. Results thereof are shown in Table 2.

### (Example 27)

As shown in Table 2, a white ink according to Example 27 was prepared in the same manner as in Example 1, and a precipitation property was evaluated by the above-described method. An evaluation sample according to Example 27 was prepared in the same manner as in Example 19. A result thereof is shown in Table 2. Further, as shown in Table 2, a pretreatment liquid according to Example 27 was prepared in the same manner as in Example 19 except for the following points. In Example 27, as the aggregating agent, 2 parts by mass of a quaternary ammonium salt abbreviated as 4AM and 5 parts by mass (in terms of a solid content) of a cationic polymer abbreviated as PAM3 (product name: PAS-92A) shown in Table 1 were used in combination, and as the resin particles in the ink, 10 parts by mass (in terms of a solid content) of the abbreviation PAc (product name: Movinyl 6763) shown in Table 1 was used.

By using the pretreatment liquid and the white ink according to Example 27, an evaluation sample according to Example 27 was prepared in the same manner as in Example 19 as shown in Table 2. Whiteness, blueness, and cracks of a white image and hardness of a cloth material of the evaluation sample were evaluated by the above-described method. Results thereof are shown in Table 2.

### (Example 28)

As shown in Table 2, a white ink according to Example 28 was prepared in the same manner as in Example 1, and a precipitation property was evaluated by the above-described method. A result thereof is shown in Table 2. Further, as shown in Table 2, a pretreatment liquid according to Example 28 was prepared in the same manner as in Example 19.

By using the pretreatment liquid and the white ink according to Example 28, an evaluation sample according to Example 28 was prepared in the same manner as in Example 19 except for the following points as shown in Table 2. In Example 28, the application amount of the pretreatment liquid was 30 mg/cm², and a ratio of the application amount of the pretreatment liquid and the application amount of the white ink was set to 2:1. Whiteness, blueness, and cracks of a white image and hardness of a cloth material of the evaluation sample were evaluated by the above-described method. Results thereof are shown in Table 2.

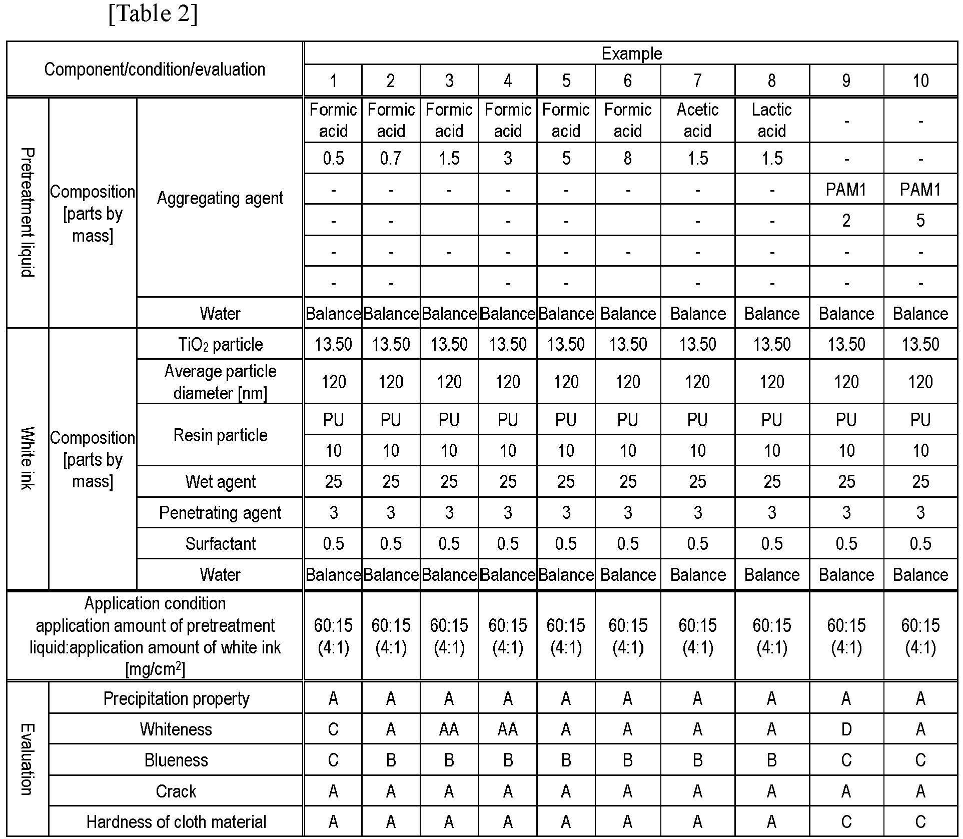

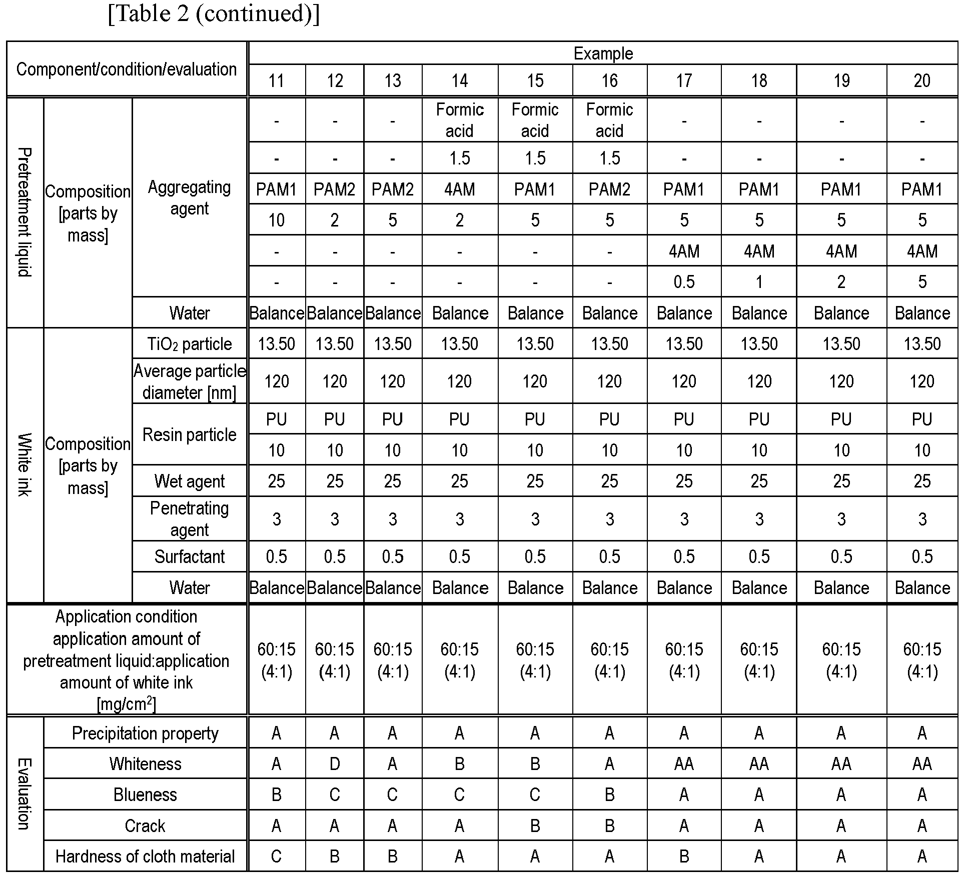

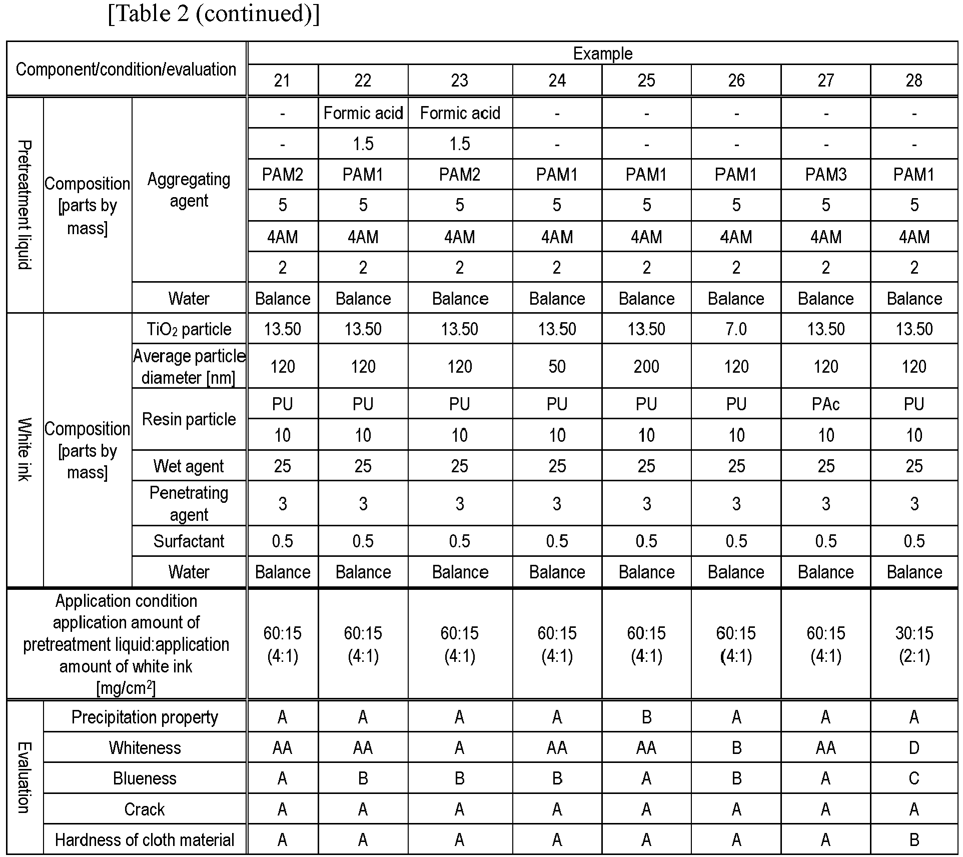

### (Comparative Examples 1 and 2)

As shown in Table 3, a white ink according to Comparative Example 1 or 2 was prepared in the same manner as in Example 19 except for the following points, and a precipitation property was evaluated by the above-described method. In Comparative Example 1, titanium oxide particles having an average particle diameter of 300 nm were used as the titanium oxide particles. In Comparative Example 2, titanium oxide particles having an average particle diameter of 10 nm were used. Results thereof are shown in Table 3. Further, as shown in Table 3, a pretreatment liquid according to Comparative Example 1 or 2 was prepared in the same manner as in Example 19.

By using the pretreatment liquid and the white ink according to Comparative Example 1 or 2, an evaluation sample according to Comparative Example 1 or 2 was prepared in the same manner as in Example 19 as shown in Table 3. Whiteness, blueness, and cracks of a white image and hardness of a cloth material of each of the evaluation samples were evaluated by the above-described method. Results thereof are shown in Table 3.

### (Comparative Examples 3 and 4)

As shown in Table 3, a white ink according to Comparative Example 3 or 4 was prepared in the same manner as in Example 1, and a precipitation property was evaluated by the above-described method. A result thereof is shown in Table 3. Further, as shown in Table 3, a pretreatment liquid according to Comparative Example 3 or 4 was prepared in the same manner as in Example 1 except for the following points. In Comparative Example 3, only 2 parts by mass of a quaternary ammonium salt abbreviated as 4AM was used as the aggregating agent. In Comparative Example 4, only 5 parts by mass of a quaternary ammonium salt abbreviated as 4AM was used as the aggregating agent.

By using the white ink according to Comparative Example 3 or 4, an evaluation sample according to Comparative Example 3 or 4 was prepared as shown in Table 3. Whiteness, blueness, and cracks of a white image and hardness of a cloth material of each of the evaluation samples were evaluated by the above-described method. Results thereof are shown in Table 3.

### (Comparative Examples 5 to 7)

As shown in Table 3, white inks according to Comparative Examples 5 to 7 were prepared in the same manner as in Example 1, and precipitation properties were evaluated by the above-described method. Results thereof are shown in Table 3. Further, as shown in Table 3, pretreatment liquids according to Comparative Examples 5 to 7 were prepared in the same manner as in Example 1 except for the following points. In Comparative Example 5, calcium nitrate tetrahydrate (Ca(NO₃)₂·4H₂O, abbreviated as "CNT" in Table 3), which is a polyvalent metal salt, was used as the aggregating agent in a content of 9.6 parts by mass, rather than an organic acid or a cationic polymer. In Comparative Example 6, calcium chloride (CaCl₂) was used as the aggregating agent in a content of 0.83 parts by mass. In Comparative Example 7, calcium chloride (CaCl₂) was used as the aggregating agent in a content of 4.5 parts by mass (Comparative Example 7).

By using the white inks according to Comparative Examples 5 to 7, evaluation samples according to Comparative Examples 5 to 7 were prepared in the same manner as in Example 1 as shown in Table 3. Whiteness, blueness, and cracks of a white image and hardness of a cloth material of each of the evaluation samples were evaluated by the above-described method. Results thereof are shown in Table 3.

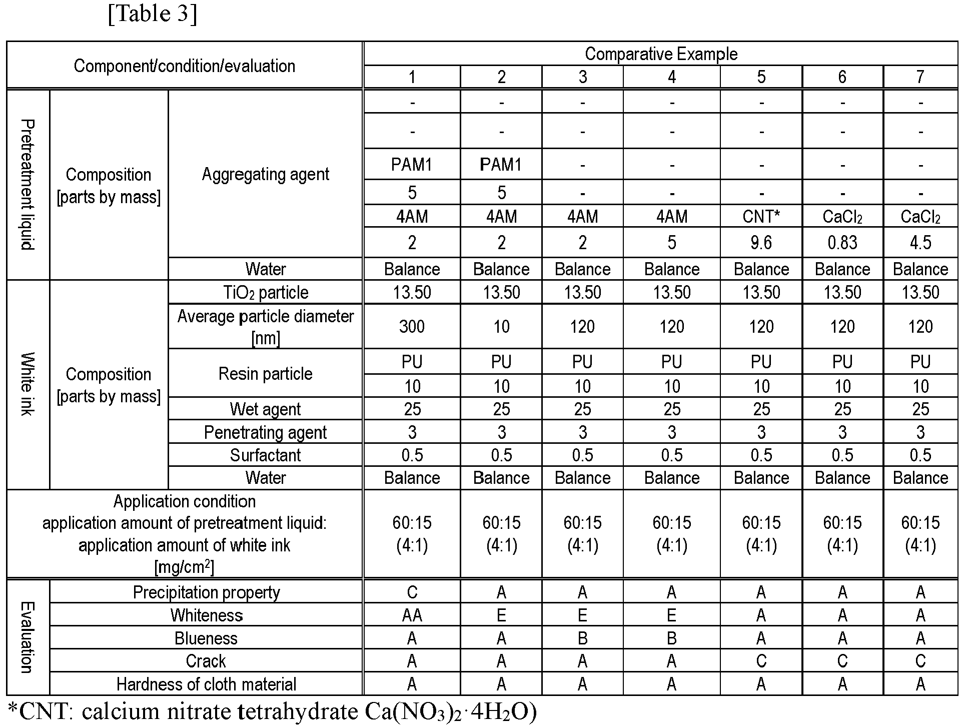

### (Comparison of Examples and Comparative Examples)

As shown in Examples 1 to 28, when the pretreatment liquid according to the present disclosure is used, even when the white ink is prepared using the titanium oxide particles having the average particle diameter in the range of more than 10 nm and 200 nm or less, it is possible to achieve a good pigment precipitation property (property in which the titanium oxide particles are difficult to precipitate, and A or more in the evaluation). Further, when the pretreatment liquid according to the present disclosure is used, it is possible to prevent the blueness in the formed white image (C or more in the evaluation), and to achieve the good whiteness (D or more in the evaluation). Furthermore, when the pretreatment liquid according to the present disclosure is used, it is possible to effectively prevent the occurrence of the crack in the white image (B or more in the evaluation), and the cloth material on which the white image is formed has good flexibility and can prevent the hardness (C or more in the evaluation).

In particular, even when the content of the aggregating agent contained in the pretreatment liquid is changed (Examples 1 to 6), the good whiteness can be achieved in the white image (C or more in the evaluation). Further, even when the content of the aggregating agent is changed, it is possible to favorably prevent the blueness of the white image (C or more in the evaluation) and effectively prevent the crack of the white image (A in the evaluation). Further, even when the content of the aggregating agent is changed, it is possible to prevent the hardness of the cloth material on which the white image is formed and achieve the good flexibility (A in the evaluation).

Even when a type of the organic acid used as the aggregating agent is changed (Examples 3, 7, and 8), good results can be achieved. That is, even under this condition, it is possible to prevent the blueness in the white image (B in the evaluation) and achieve the good whiteness (A in the evaluation). Further, even under this condition, it is possible to effectively prevent the crack of the white image (A in the evaluation), to prevent the hardness of the cloth material on which the white image is formed, and to achieve the good flexibility (C or more in the evaluation).

Similarly, even when the cationic polymer of PAM1 or PAM2 is used as the aggregating agent and the content thereof is changed (Examples 9 to 13), good results can be achieved. That is, even under this condition, the good whiteness can be achieved even when the content of the cationic polymer is relatively small (D or more in the evaluation). Further, even under this condition, the blueness in the white image can be favorably prevented (C or more in the evaluation). Furthermore, even under this condition, it is possible to prevent the hardness of the cloth material on which the white image is formed and achieve the good flexibility (C or B in the evaluation).

Even when the quaternary ammonium salt (4AM) and the organic acid or the cationic polymer are used in combination as the aggregating agent (Examples 14 to 21), good results can be achieved. That is, even under this condition, the good whiteness can be achieved in the white image (B or more in the evaluation), and the blueness of the white image can also be prevented (C or more in the evaluation). Further, even under this condition, it is possible to prevent the crack of the white image (B or more in the evaluation), to prevent the hardness of the cloth material on which the white image is formed, and to achieve the good flexibility (B or more in the evaluation). In particular, by optimizing the combination of the quaternary ammonium salt and the cationic polymer (Examples 18 to 21), the whiteness can be further improved (AA in the evaluation), and all evaluation other than this can be improved (A in the evaluation).

Similarly, even when three types of compounds, that is, the quaternary ammonium salt, the organic acid, and the cationic polymer are used in combination as the aggregating agent (Examples 22 and 23), good results can be achieved. That is, even under this condition, the good whiteness can be achieved in the white image (A or more in the evaluation), and the blueness of the white image can also be prevented (B or more in the evaluation). Further, all evaluation other than these can be good (A in the evaluation).

Based on the combination of the quaternary ammonium salt and the cationic polymer (Example 19), even when the average particle diameter or the content of the titanium oxide particles is changed (Examples 24 to 26), good results can be achieved. That is, even under this condition, the good whiteness can be achieved in the white image (B or AA in the evaluation), and the blueness of the white image can also be prevented (B or more in the evaluation). Further, all evaluation other than these can be good (A in the evaluation). An increase in average particle diameter of the titanium oxide particles affects the pigment precipitation property (Example 25).

Furthermore, based on the combination of the quaternary ammonium salt and the cationic polymer (Example 19), even when a type of the cationic polymer and a type of the resin particles are changed (Example 27), good results can be achieved. That is, even under this condition, the good whiteness can be achieved in the white image (AA in the evaluation), and all evaluation other than this can be good (A in the evaluation). Further, even when the amount of the pretreatment liquid applied to the white ink is reduced (Example 28), good results can be achieved. That is, even under this condition, the good whiteness can be achieved in the white image (D in the evaluation), and the blueness of the white image can be prevented (B in the evaluation). Further, even under this condition, it is possible to effectively prevent the crack of the white image (B in the evaluation), to prevent the hardness of the cloth material on which the white image is formed, and to achieve the good flexibility (B in the evaluation).

On the other hand, based on the combination of the quaternary ammonium salt and the cationic polymer (Example 19), when the average particle diameter of the titanium oxide particles is too large (Comparative Example 1), evaluation other than the pigment precipitation property can be good (A or AA in the evaluation), but the pigment precipitation property is reduced (C in the evaluation). When the average particle diameter of the titanium oxide particles is too small (Comparative Example 2), evaluation other than the whiteness can be good (A in the evaluation), but the whiteness decreases (E in the evaluation).

Furthermore, when only the quaternary ammonium salt is used as the aggregating agent (Comparative Examples 3 and 4), the whiteness decreases even when the content of the quaternary ammonium salt is increased (E in the evaluation). Further, when the polyvalent metal salt is used as the aggregating agent (Comparative Examples 5 to 7), evaluation other than the crack can be good (A in the evaluation), but evaluation of the crack is lowered (C in the evaluation).

The present invention is not limited to the above embodiment, various changes are possible within the scope of claims, and embodiments obtained by combining technical means disclosed in the different embodiments and a plurality of variations as appropriate are also included in the technical scope of the present invention.

### [Industrial Applicability]

The present invention can be widely and suitably used in the field of ink used for forming an image on a cloth material such as a knitted fabric or a woven fabric by an ink jet method.

## Claims

1. An image forming pretreatment liquid that is applied to a cloth material, which is an absorbent base material, before an image is formed on the cloth material using an ink, the image forming pretreatment liquid comprising:
a cationic polymer; and/or
an organic acid of 0.5% by mass or more and 8% by mass or less,
wherein as the ink, at least a white ink containing titanium oxide particles having an average particle diameter of more than 10 nm and 200 nm or less is used.

2. The image forming pretreatment liquid according to claim 1,
wherein a content of the organic acid, when present, in the image forming pretreatment liquid is 0.7% by mass or more, and
wherein a content of the cationic polymer, when present, in the image forming pretreatment liquid is 2% by mass or more and 10% by mass or less in terms of a nonvolatile content.

3. The image forming pretreatment liquid according to claim 1 or 2,
wherein the image forming pretreatment liquid contains a quaternary ammonium salt together with the cationic polymer.

4. The image forming pretreatment liquid according to claim 3,
wherein a content of the quaternary ammonium salt is more than 0.5% by mass and 5% by mass or less.

5. The image forming pretreatment liquid according to claim 1,
wherein the cationic polymer has, in a monomer unit, a nitrogen-containing structure in which an allyl group (IUPAC name: 2-propenyl group) is bonded to a nitrogen atom.

6. The image forming pretreatment liquid according to claim 5,
wherein the nitrogen-containing structure is an ammonium salt which is a primary ammonium salt, a secondary ammonium salt, a tertiary ammonium salt, or a quaternary ammonium salt, and comprises at least one allyl group bonded to a nitrogen atom of the ammonium salt.

7. The image forming pretreatment liquid according to claim 6,
wherein the nitrogen-containing structure is a structure in which two allyl groups are bonded to the nitrogen atom of the ammonium salt.

8. The image forming pretreatment liquid according to claim 1,
wherein the organic acid comprises at least one of formic acid, a saturated fatty acid, a hydroxy acid, an aromatic carboxylic acid, and a dicarboxylic acid.

9. The image forming pretreatment liquid according to claim 1 or 8,
wherein the organic acid has 1 to 8 carbon atoms in a molecule.

10. The image forming pretreatment liquid according to claim 9,
wherein the organic acid has 1 to 3 carbon atoms in the molecule.

11. An ink set comprising:
the image forming pretreatment liquid according to claim 1 or 2; and
a white ink containing titanium oxide particles having an average particle diameter of more than 10 nm and 200 nm or less.

12. The ink set according to claim 11,
wherein the titanium oxide particles have an average particle diameter of 50 nm or more.

13. An image forming method comprising:
an image forming step of forming, using an ink, an image on a cloth material which is an absorbent base material; and
a pretreatment liquid application step of applying a pretreatment liquid to the cloth material before the image forming step,
wherein the pretreatment liquid comprises: a cationic polymer; and/or an organic acid of 0.5% by mass or more and 8% by mass or less.

14. The image forming method according to claim 13,
wherein the image forming step includes image formation using a white ink containing titanium oxide particles having an average particle diameter of more than 10 nm and 200 nm or less as the ink.

15. The image forming method according to claim 13 or 14,
wherein in the pretreatment liquid application step, an application amount of the pretreatment liquid per unit area of the cloth material is 30 mg/cm² or more.
